(19) Europäisches Patentamt / European Patent Office / Office européen des brevets

(11) **EP 4 395 439 B1**

(12) **EUROPEAN PATENT SPECIFICATION**

(45) Date of publication and mention
of the grant of the patent:
**24.06.2026 Bulletin 2026/26**

(21) Application number: **22874428.0**

(22) Date of filing: **08.08.2022**

(51) International Patent Classification (IPC):
*H04L 5/00* (2006.01)          *H04W 72/04* (2023.01)
*H04W 72/23* (2023.01)        *H04W 16/14* (2009.01)

(52) Cooperative Patent Classification (CPC):
**H04W 16/14; H04L 5/0035; H04L 5/0053;
H04L 5/0094;** H04L 5/0005; H04L 5/0044;
H04W 72/23; Y02D 30/70

(86) International application number:
**PCT/CN2022/110800**

(87) International publication number:
**WO 2023/051032 (06.04.2023 Gazette 2023/14)**

(54) **METHOD AND APPARATUS USED IN NODE FOR WIRELESS COMMUNICATION**

VERFAHREN UND VORRICHTUNG ZUR VERWENDUNG IN EINEM KNOTEN FÜR DRAHTLOSE
KOMMUNIKATION

PROCÉDÉ ET APPAREIL UTILISÉS DANS UN NOEUD POUR DES COMMUNICATIONS SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2021  CN 202111159527**

(43) Date of publication of application:
**03.07.2024  Bulletin 2024/27**

(73) Proprietor: **Apogee 5G Global, LLC
Plano, TX 75024 (US)**

(72) Inventors:
• **HU, Yang**
  **Shanghai 201206 (CN)**
• **ZHANG, Xiaobo**
  **Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(56) References cited:
WO-A1-2021/022736      WO-A1-2021/034086
WO-A1-2021/147796      CN-A- 109 587 791
CN-A- 110 149 180        CN-A- 110 324 127
CN-A- 110 958 094        CN-A- 111 050 404
CN-A- 112 868 201        CN-A- 112 970 221
CN-A- 113 056 956        CN-A- 114 666 019
US-A1- 2015 319 802      US-A1- 2020 022 144
US-A1- 2020 252 854      US-A1- 2021 243 767
US-A1- 2024 064 766

**Description**

**TECHNICAL FIELD**

The present application relates to transmission methods and devices in wireless communication systems, and in particular to a transmission scheme and device of multi-antenna in wireless communications.

**BACKGROUND**

Application scenarios of future wireless communication systems are becoming increasingly diversified, and different application scenarios have different performance demands on systems. In order to meet different performance requirements of various application scenarios, it was decided at 3rd Generation Partner Project (3GPP) Radio Access Network (RAN) #72th plenary that a study on New Radio (NR), or what is called Fifth Generation (5G) shall be conducted. A work item of NR was approved at 3GPP RAN #75th plenary to standardize NR.

In new radio technology, multi-antenna (such as Multiple Input Multiple Output (MIMO), Transmission Reception Point (TRP), and multi-Panel) technology is an important component. In order to adapt to more diverse application scenarios and meet higher requirements, a further enhanced WI of MIMO under NR was approved at 3GPP RAN #86th plenary to support more robust and spectrally efficient multi-antenna communications for a wider range of application scenarios.

US 2021/243767 A1 discloses a communication method including a method of determining a size of information and/or a method of efficiently interpreting the information.

CN 112868201A discloses a downlink control information transmission method in which the network equipment repeatedly sends the same DCI in the corresponding multiple time slots by adopting multiple beams, so that the terminal equipment can conveniently receive and decode the DCI, and the reliability of downlink transmission is improved.

**SUMMARY**

In multi-antenna systems, such as multi-Transmission Reception Point (TRP) communications, a same channel or signal can be transmitted through multiple TRP nodes to enhance the robustness of transmission. Multi-TRP transmission of data channel is supported in release 16 (Rel-16), and 3GPP plans to introduce multi-TRP transmission of control channel in Rel-17. With the introduction of multi-TRP transmissions of the control channel, (especially in shared spectrum channel access (SSCA) operations), how to use a fallback DCI format to schedule frequency-domain resources is a key issue to be addressed.

To address the above problem, the present application provides a solution. It should be noted that in the description of the present application, only a multi-antenna system, especially a multi-TRP transmission system, is used as a typical application scenario or example; the present application is also applicable to other scenarios facing similar problems (such as scenarios with higher requirements for robustness or coverage of the control channel, or scenarios that require PDCCH (Physical Downlink Control CHannel) correlation other than multi-TRP transmission, including but not limited to coverage enhancement systems, Internet of Things (IoT), Ultra Reliable Low Latency Communication (URLLC) networks, Internet of Vehicles (IoVs), etc.), where similar technical effects can be achieved. Additionally, the adoption of a unified solution for various scenarios, including but not limited to scenarios of multi-antenna system, contributes to the reduction of hardware complexity and costs, or improve performance. If no conflict is incurred, embodiments in any node in the present application and the characteristics of the technical solutions are also applicable to any other node, and vice versa. And the technical solutions in the present application and their characteristics can be arbitrarily combined if there is no conflict.

Interpretations of the terminology in the present application refer to definitions given in the 3GPP TS36, the 3GPP TS38, the 3GPP TS37 series, or in Institute of Electrical and Electronics Engineers (IEEE) protocol specifications.

According to the present disclosure, a user equipment, UE, a base station, and a method according to the independent claims are provided. Preferred embodiments are set forth in the dependent claims.

In certain examples, a problem to be solved in the present application may comprise: how to determine frequency-domain resources scheduled by a received backoff DCI (Downlink Control Information) format (such as DCI format 0_0) in the operation of shared spectrum channel access after introducing the multi-TRP transmission of a PDCCH.

In certain examples, a problem to be solved in the present application may comprise: when a UE uses Uplink resource allocation type 2 to determine frequency-domain resource allocation, how to interpret frequency-domain resources scheduled by a backoff DCI format (e.g. DCI format 0_0) received in two associated PDCCH candidates.

In certain examples, advantages of methods disclosed herein may comprise: avoiding inconsistent understanding between communication parties regarding the uplink resource block set used to determine frequency-domain resources occupied by a PUSCH.

In certain examples, advantages of methods disclosed herein may comprise: enhancing the flexibility of base station using a fallback DCI format (such as DCI format 0_0) for scheduling.

In certain examples, advantages of methods disclosed herein may comprise: being beneficial for the use of multi-TRP transmission technology in shared spectrum channel access scenarios, enhancing the flexibility and adaptability of the system configuration.

In certain examples, advantages of methods disclosed herein may comprise: workload required for standard revision being small.

It may thus be summarized that the technical solutions in the present application may be advantageous in the following aspects:

- avoiding inconsistencies in the understanding of frequency-domain resources scheduled between the two communication parties;
- enhancing the flexibility of base station scheduling;
- enhancing the flexibility in system configuration;
- scenario adaptability being better;
- workload required for standard revision being small.

## BRIEF DESCRIPTION OF THE DRAWINGS

Other features, objects and advantages of the present application will become more apparent from the detailed description of non-restrictive embodiments taken in conjunction with the following drawings:

FIG. 1 illustrates a flowchart of the processing of a first node according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of a first communication device and a second communication device according to one embodiment of the present application;
FIG. 5 illustrates a flowchart of signal transmission according to one embodiment of the present application;
FIG. 6 illustrates a schematic diagram of relations among a first PDCCH candidate, a second PDCCH candidate, a first search space set and a second search space set according to one embodiment of the present application;
FIG. 7 illustrates a schematic diagram of relations among a first search space set, a second search space set, a first CORESET and a second CORESET according to one embodiment of the present application;
FIG. 8 illustrates a schematic diagram of determining a reference PDCCH candidate according to one embodiment of the present application;
FIG. 9 illustrates a schematic diagram of relations among a first signaling, at least one interlace of RBs, a target frequency-domain resource pool and frequency-domain resources occupied by a first PUSCH according to one embodiment of the present application;
FIG. 10 illustrates an illustration schematic diagram of a first signaling according to one embodiment of the present application;
FIG. 11 illustrates a structure block diagram of a processor in a first node according to one embodiment of the present application;
FIG. 12 illustrates a structure block diagram of a processor in second node according to one embodiment of the present application.

## DESCRIPTION OF THE EMBODIMENTS

The technical solution of the present application will be further described in detail below in combination with the drawings. It should be noted that, in the case of no conflict, the embodiments of the present application and the features in the embodiments may be combined with each other arbitrarily.

## Embodiment 1

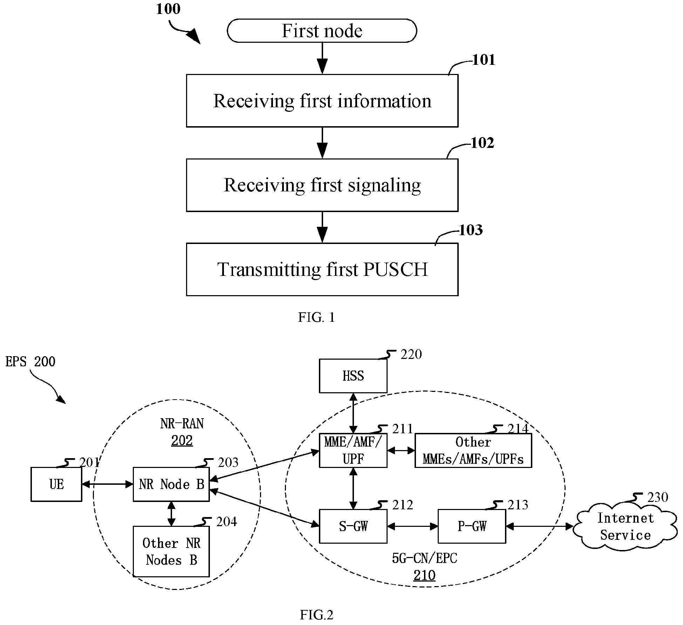

Embodiment 1 illustrates a flowchart of processing of a first node according to one embodiment of the present application, as shown in FIG. 1.

In Embodiment 1, the first node in the present application receives first information in step 101; receives a first signaling in step 102; transmits a PUSCH in step in step 103.

In embodiment 1, the first information is used to determine that a first PDCCH candidate and a second PDCCH candidate are associated with each other, and both the first PDCCH candidate and the second PDCCH candidate are used to carry the first signaling; frequency-domain resources occupied by the first PUSCH belong to a target frequency-domain resource pool; the first signaling is used to determine the frequency-domain resources occupied by the first PUSCH from the target frequency-domain resource pool, the target frequency-domain resource pool is one of multiple frequency-domain resource pools, and there exist two orthogonal frequency-domain resource pools in the multiple frequency-domain resource pools that respectively overlap with a lowest-indexed CCE occupied by the first PDCCH candidate and a lowest-indexed CCE occupied by the second PDCCH candidate; a reference PDCCH candidate is one of the first PDCCH candidate or the second PDCCH candidate, and the reference PDCCH candidate is used to determine the target frequency-domain resource pool from the multiple frequency-domain resource pools.

In one embodiment, the first information is a higher-layer signaling.

In one embodiment, the first information is an RRC signaling.

In one embodiment, the first information comprises one or multiple fields in an RRC signaling.

In one embodiment, the first information comprises an IE.

In one embodiment, the first information comprises one or more fields in an IE.

In one embodiment, the first information is a Medium Access Control layer Control Element (MAC CE) signaling.

In one embodiment, the first information comprises one or multiple fields in a MAC CE signaling.

In one embodiment, a name of the first information comprises link (case insensitive).

In one embodiment, a name of the first information comprises SearchSpace (case insensitive).

In one embodiment, a name of the first information comprises ControlResourceSet or CORESET (case insensitive).

In one embodiment, the first signaling is a physical-layer signaling.

In one embodiment, the first signaling is a Downlink control information (DCI) format.

In one embodiment, the first signaling is DCI format 0_0.

In one embodiment, the first signaling is DCI format 0_0, and for the specific meaning of the DCI format 0_0, refer to chapter 7. 3. 1. 1 in 3GPP TS38. 212.

In one embodiment, the first signaling is DCI format 0_1, and for the specific meaning of the DCI format 0_1, refer to chapter 7. 3. 1. 1 in 3GPP TS38. 212.

In one embodiment, the first signaling is DCI format 0_2, and for the specific meaning of the DCI format 0_2, refer to chapter 7. 3. 1. 1 in 3GPP TS38. 212.

In one embodiment, the first signaling comprises one or multiple fields in a DCI format.

In one embodiment, the first signaling is an UpLink Grant Signaling.

In one embodiment, the first signaling is a higher-layer signaling.

In one embodiment, the first signaling is an RRC signaling.

In one embodiment, the first signaling comprises one or multiple fields in an RRC signaling.

In one embodiment, the first signaling comprises an IE.

In one embodiment, the second signaling comprises one or multiple fields in an IE.

In one embodiment, the first signaling is a Medium Access Control layer Control Element (MAC CE) signaling.

In one embodiment, the first signaling comprises one or multiple fields in a MAC CE signaling.

In one embodiment, the first information is used to indicate that the first PDCCH candidate and the second PDCCH candidate are associated with each other.

In one embodiment, the first information is used to explicitly indicate that the first PDCCH candidate and the second PDCCH candidate are associated with each other.

In one embodiment, the first information is used to implicitly indicate that the first PDCCH candidate and the second PDCCH candidate are associated with each other.

In one embodiment, the first information is used to configure a mutually associated relation between the first PDCCH candidate and the second PDCCH candidate.

In one embodiment, the first information determines that the first PDCCH candidate and the second PDCCH candidate are associated with each other by configuring the first search space set in the present application and the second search space set in the present application to be associated with each other.

In one embodiment, the first information is used to determine that the first PDCCH candidate and the second PDCCH candidate are associated with each other by configuring the first CORESET in the present application and the second CORESET in the present application to be associated with each other.

In one embodiment, the expression that the first information is used to determine that a first PDCCH candidate and a second PDCCH candidate are associated with each other comprises: a first search space set and a second search space set respectively have different search space set index values, the first search space set and the second search space set are configured as an interrelated relation by the first information, the first PDCCH candidate and the second PDCCH candidate respectively correspond to a first search space set and a second search space set, and the first PDCCH candidate and the second PDCCH candidate have a same CCE aggregation level and a same index value.

In one embodiment, the expression that the first information is used to determine that a first PDCCH candidate and a second PDCCH candidate are associated with each other comprises: the first information is used to determine that one of the first PDCCH candidate and the second PDCCH candidate is associated with the other.

In one embodiment, the first PDCCH candidate and the second PDCCH candidate have a same CCE aggregation level.

In one embodiment, from a frequency-domain perspective, the first PDCCH candidate and the second PDCCH candidate do not overlap.

In one embodiment, from a time-domain perspective, the first PDCCH candidate and the second PDCCH candidate belong to a same slot.

In one embodiment, from a time-domain perspective, time-domain resources occupied by the first PDCCH candidate are exactly the same as time-domain resources occupied by the second PDCCH candidate.

In one embodiment, from a time-domain perspective, time-domain resources occupied by the first PDCCH candidate and time-domain resources occupied by the second PDCCH candidate are mutually non-overlapping.

In one embodiment, from a time-domain perspective, a start time of the first PDCCH candidate is different from a start time of the second PDCCH candidate.

In one embodiment, from a time-domain perspective, an end time of the first PDCCH candidate is different from an end time of the second PDCCH candidate.

In one embodiment, the first PDCCH candidate and the second PDCCH candidate have no overlap in frequency domain and occupy exactly same time-domain resources in time domain.

In one embodiment, the first PDCCH candidate and the second PDCCH candidate have no overlap in time domain and occupy exactly the same frequency-domain resources in frequency domain.

In one embodiment, the first PDCCH candidate and the second PDCCH candidate have no overlap in frequency domain and overlap in time domain.

In one embodiment, the first PDCCH candidate and the second PDCCH candidate have no overlap in time domain and overlap in frequency domain.

In one embodiment, the expression that both the first PDCCH candidate and the second PDCCH candidate are used to carry the first signaling comprises: the first PDCCH candidate and the second PDCCH candidate are both used to transmit the first signaling.

In one embodiment, the expression that both the first PDCCH candidate and the second PDCCH candidate are used to carry the first signaling comprises: the first PDCCH candidate and the second PDCCH candidate are both used to perform detection for the first signaling.

In one embodiment, the expression that both the first PDCCH candidate and the second PDCCH candidate are used to carry the first signaling comprises: both the first PDCCH candidate and the second PDCCH candidate are used to perform reception for the first signaling.

In one embodiment, the expression that both the first PDCCH candidate and the second PDCCH candidate are used to carry the first signaling comprises: the first signaling is a result obtained by jointly decoding a signal received in the first PDCCH candidate and a signal received in the second PDCCH candidate.

In one embodiment, the expression that both the first PDCCH candidate and the second PDCCH candidate are used to carry the first signaling comprises: the first signaling is a result obtained by merging a signal received in the first PDCCH candidate and a signal received in the second PDCCH candidate and then performing decoding.

In one embodiment, the expression that both the first PDCCH candidate and the second PDCCH candidate are used to carry the first signaling comprises: two repetitions of an output bit sequence obtained after the first signaling is through at least part of CRC attachment, code block segmentation, code block CRC attachment, channel coding, rate matching, and code block concatenation are respectively transmitted in the first PDCCH candidate and the second PDCCH candidate.

In one embodiment, the expression that both the first PDCCH candidate and the second PDCCH candidate are used to carry the first signaling comprises: the first signaling is detected in either the first PDCCH candidate or the second PDCCH candidate, or both a signal received in the first PDCCH candidate and a signal received in the second PDCCH candidate are used to perform decoding to obtain the first signaling.

In one embodiment, the expression that both the first PDCCH candidate and the second PDCCH candidate are used to carry the first signaling comprises: the first signaling is detected in either the first PDCCH candidate or the second PDCCH candidate.

In one embodiment, the expression of transmitting a first PUSCH comprises: transmitting a signal in a first PUSCH.

In one embodiment, the expression of transmitting a first PUSCH comprises: transmitting multiple bits in a first PUSCH; herein, the multiple bits are transmitted in the first PUSCH after through at least part of CRC attachment, code block segmentation, code block CRC attachment, channel coding, rate matching, code block concatenation, scrambling, modulation, spreading, and layer mapping, Transform precoding, precoding, mapping to physical resources, multi-carrier symbol generation, modulation and upconversion.

In one subembodiment of the above embodiment, the multiple bits comprise a Transport Block (TB).

In one subembodiment of the above embodiment, the multiple bits comprise at least one Code Block (CB).

In one subembodiment of the above embodiment, the multiple bits comprise a CSI (Channel state information) bit.

In one embodiment, the first PUSCH is a physical uplink shared channel (PUSCH).

In one embodiment, the frequency-domain resources occupied by the first PUSCH comprise at least one resource block.

In one embodiment, the resource blocks in the present application are described from a frequency-domain perspective.

In one embodiment, the resource block in the present application comprises 12 subcarriers in frequency domain.

In one embodiment, the frequency-domain resources occupied by the first PUSCH comprise multiple subcarriers.

In one embodiment, the first node is configured to use uplink resource allocation type 2.

In one embodiment, a higher-layer parameter useInterlacePUCCH-PUSCH is configured to the first node.

In one embodiment, the target frequency-domain resource pool comprises at least one resource block (RB).

In one embodiment, the target frequency-domain resource pool comprises an uplink RB set.

In one embodiment, the target frequency-domain resource pool is an uplink RB set.

In one embodiment, the multiple frequency-domain resource pools respectively comprise multiple uplink RB sets.

In one embodiment, the multiple frequency-domain resource pools are respectively multiple uplink RB sets (uplink RB sets), and any of the multiple uplink resource block sets consists of multiple resource blocks.

In one embodiment, the multiple frequency-domain resource pools are respectively multiple uplink RB sets (uplink RB sets), and any of the multiple uplink resource block sets consists of multiple resource blocks continuous in frequency domain.

In one embodiment, the multiple uplink resource block sets are configurable.

In one embodiment, the multiple uplink resource block sets are configured by an RRC signaling.

In one embodiment, an s-th uplink resource block set among the multiple uplink resource block sets consists of $RB_{s,x}^{\text{size},\mu}$ resource block(s); where $RB_{s,x}^{\text{size},\mu} = RB_{s,x}^{\text{end},\mu} - RB_{s,x}^{\text{start},\mu} + 1$, $RB_{s,x}^{\text{start},\mu} = N_{\text{grid},x}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$, $RB_{s,x}^{\text{end},\mu} = N_{\text{grid},x}^{\text{start},\mu} + \begin{cases} N_{\text{grid},x}^{\text{size},\mu} - 1 & s = N_{\text{RB-set},x} - 1 \\ GB_{s,x}^{\text{start},\mu} - 1 & \text{otherwise} \end{cases}$, $GB_{s,x}^{\text{start},\mu}$ and $GB_{s,x}^{\text{size},\mu}$ are respectively configured by higher-layer parameters startCRB and nrofCRBs, the $N_{\text{grid},x}^{\text{size},\mu}$ is carrier size, the $N_{\text{RB-set},x}$ is equal to a number of uplink resource block set(s) in the multiple uplink resource block sets, the downlink x is set as UL, and the s is any non-negative integer less than the $N_{\text{RB-set},x}$.

In one embodiment, the $N_{\text{grid},x}^{\text{start},\mu}$ is an index of a carrier starting resource block.

In one embodiment, the $N_{\text{grid},x}^{\text{start},\mu}$ is configurable.

In one embodiment, the $N_{\text{grid},x}^{\text{start},\mu}$ is RRC-signaling configured.

In one embodiment, any two frequency-domain resource pools among the multiple frequency-domain resource pools do not overlap in frequency domain.

In one embodiment, the multiple frequency-domain resource pools are determined through a configuration of higher-layer parameters.

In one embodiment, there exists an intra-cell guard band between two adjacent frequency-domain resource pools in the multiple frequency-domain resource pools, and the intra-cell guard band is determined by a configuration of higher-layer parameters.

In one subembodiment of the above embodiment, the intra-cell guard band is used to separate the multiple frequency-domain resource pools.

In one subembodiment of the above embodiment, the intra-cell guard band comprises at least one resource block.

In one subembodiment of the above embodiment, the higher-layer parameters used to determine the intra-cell guard band comprise startCRB and nrofCRBs.

In one subembodiment of the above embodiment, a number of the intra-cell guard band(s) is equal to a number of frequency-domain resource pool(s) comprised in the multiple frequency-domain resource pools minus 1.

In one embodiment, the expression that the first signaling is used to determine the frequency-domain resources occupied by the first PUSCH from the target frequency-domain resource pool comprises: the first signaling is used to indicate at least one interlace of resource blocks, and the frequency-domain resources occupied by the first PUSCH are an intersection of resource blocks comprised in the at least one interlace of resource blocks and the target frequency-domain resource pool.

In one embodiment, the expression that the first signaling is used to determine the frequency-domain resources occupied by the first PUSCH from the target frequency-domain resource pool comprises: the first signaling is used to indicate a location of the frequency-domain resources occupied by the first PUSCH in the target frequency-domain resource pool.

In one embodiment, the first signaling is used to explicitly indicate a location of the frequency-domain resources occupied by the first PUSCH in the target frequency-domain resource pool.

In one embodiment, the first signaling is used to implicitly indicate a location of the frequency-domain resources occupied by the first PUSCH in the target frequency-domain resource pool.

In one embodiment, a number of frequency-domain resource pools in multiple frequency-domain resource pools is equal to 2.

In one embodiment, a number of frequency-domain resource pools in multiple frequency-domain resource pools is equal to 3.

In one embodiment, a number of frequency-domain resource pools in multiple frequency-domain resource pools is equal to 4.

In one embodiment, a number of frequency-domain resource pools in multiple frequency-domain resource pools is equal to 5.

In one embodiment, in the present application, the meaning that two frequency-domain resource pools are orthogonal to each other comprises: the two frequency-domain resource pools do not overlap in frequency domain.

In one embodiment, in the present application, the meaning that two frequency-domain resource pools are orthogonal to each other comprises: from a frequency-domain perspective, there does not exist a subcarrier that belongs to either of the two frequency-domain resource pools or the other of the two frequency-domain resource pools.

In one embodiment, the CCE is a Control channel element.

In one embodiment, a CCE occupied by the first PDCCH candidate is mapped to at least one Resource Element Group (REG) that consists of the first CORESET in the present application.

In one embodiment, a CCE occupied by the second PDCCH candidate is mapped to at least one Resource Element Group (REG) that consists of the second CORESET in the present application.

In one embodiment, the first PDCCH candidate and the second PDCCH candidate occupy a same number of CCE(s).

In one embodiment, the first PDCCH candidate and the second PDCCH candidate both occupy 1 CCE.

In one embodiment, the first PDCCH candidate and the second PDCCH candidate both occupy 2 CCEs.

In one embodiment, the first PDCCH candidate and the second PDCCH candidate both occupy 4 CCEs.

In one embodiment, the first PDCCH candidate and the second PDCCH candidate both occupy 8 CCEs.

In one embodiment, the first PDCCH candidate and the second PDCCH candidate both occupy 16 CCEs.

In one embodiment, the first PDCCH candidate is mapped to one or more CCEs based on predefined rules, and the second PDCCH candidate is mapped to one or more CCEs based on predefined rules.

In one embodiment, the first PDCCH candidate and the second PDCCH candidate respectively occupy different numbers of CCEs.

In one embodiment, the expression in the present application of lowest-indexed comprises: lowest-indexed.

In one embodiment, the first PDCCH candidate and the second PDCCH candidate are both PDCCH candidates.

In one embodiment, the first PDCCH candidate and the second PDCCH candidate are both resources reserved for PDCCH transmission.

In one embodiment, the expression that the reference PDCCH candidate is used to determine the target frequency-domain resource pool from the multiple frequency-domain resource pools comprises: the target frequency-domain resource pool is a lowest-indexed frequency-domain resource pool among multiple frequency-domain resource pools that intersects with a lowest-indexed CCE occupied by the reference PDCCH candidate.

In one embodiment, the expression that the reference PDCCH candidate is used to determine the target frequency-domain resource pool from the multiple frequency-domain resource pools comprises: the target frequency-domain resource pool is a highest-indexed frequency-domain resource pool among multiple frequency-domain resource pools that intersects with a lowest-indexed CCE occupied by the reference PDCCH candidate.

In one embodiment, the expression that the reference PDCCH candidate is used to determine the target frequency-domain resource pool from the multiple frequency-domain resource pools comprises: the target frequency-domain resource pool is a lowest-indexed frequency-domain resource pool that intersects with a CCE with a largest index value occupied by the reference PDCCH candidate among multiple frequency-domain resource pools.

In one embodiment, the expression that the reference PDCCH candidate is used to determine the target frequency-domain resource pool from the multiple frequency-domain resource pools comprises: the target frequency-domain resource pool is a frequency-domain resource pool with a largest frequency-domain resource pool that intersects with a CCE with a largest index value occupied by the reference PDCCH candidate among multiple frequency-domain resource pools.

In one embodiment, the expression that the reference PDCCH candidate is used to determine the target frequency-domain resource pool from the multiple frequency-domain resource pools comprises: a lowest-indexed CCE occupied by the reference PDCCH candidate is used to determine the target frequency-domain resource pool from multiple frequency-domain resource pools.

In one embodiment, the expression that the reference PDCCH candidate is used to determine the target frequency-domain resource pool from the multiple frequency-domain resource pools comprises: a CCE aggregation level of the reference PDCCH candidate is used to implicitly indicate the target frequency-domain resource pool from the multiple frequency-domain resource pools.

In one embodiment, whether the reference PDCCH candidate is the first PDCCH candidate or the second PDCCH candidate is configured by a higher-layer signaling.

In one embodiment, whether the reference PDCCH candidate is the first PDCCH candidate or the second PDCCH candidate is configured by an RRC signaling.

In one embodiment, whether the reference PDCCH candidate is the first PDCCH candidate or the second PDCCH candidate is configured by a MAC CE signaling.

In one embodiment, whether the reference PDCCH candidate is the first PDCCH candidate or the second PDCCH candidate is indicated by the first signaling.

## Embodiment 2

Embodiment 2 illustrates a schematic diagram of a network architecture according to the present application, as shown in FIG. 2.

FIG. 2 illustrates a network architecture 200 of 5G NR, Long-Term Evolution (LTE) and Long-Term Evolution Advanced (LTE-A) systems. The NR 5G or LTE network architecture 200 may be called an Evolved Packet System (EPS) 200 or other appropriate terms. The EPS 200 may comprise one or more UEs 201, an NG-RAN 202, an Evolved Packet Core/ 5G-Core Network (EPC/5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will readily understand that various concepts presented throughout the present application can be extended to networks providing circuit switching services or other cellular networks. The NG-RAN 202 comprises an NR node B (gNB) 203 and other gNBs 204. The gNB 203 provides UE 201-oriented user plane and control plane protocol terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of the UE 201 include cellular phones, smart phones, Session Initiation Protocol (SIP) phones, laptop computers, Personal Digital Assistant (PDA), satellite Radios, non-terrestrial base station communications, Satellite Mobile Communications, Global Positioning Systems (GPSs), multimedia devices, video devices, digital audio players (for example, MP3 players), cameras, game consoles, unmanned aerial vehicles (UAV), aircrafts, narrow-band Internet of Things (IoT) devices, machine-type communication devices, land vehicles, automobiles, wearable devices, or any other similar functional devices. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field (AMF)/ User Plane Function (UPF) 211, other MMEs/ AMFs/ UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212, the S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming Services (PSS).

In one embodiment, the UE 201 corresponds to the first node in the present application.

In one embodiment, the UE 201 corresponds to the second node in the present application.

In one embodiment, the gNB 203 corresponds to the first node in the present application.

In one embodiment, the gNB 203 corresponds to the second node in the present application.

In one embodiment, the UE 201 corresponds to the first node in the present application, and the gNB 203 corresponds to the second node in the present application.

In one embodiment, the gNB 203 is a MarcoCellular base station.

In one embodiment, the gNB 203 is a Micro Cell base station.

In one embodiment, the gNB 203 is a PicoCell base station.

In one embodiment, the gNB 203 is a Femtocell.

In one embodiment, the gNB 203 is a base station that supports large delay differences.

In one embodiment, the gNB 203 is a flight platform.

In one embodiment, the gNB 203 is satellite equipment.

In one embodiment, both the first node and the second node in the present application correspond to the UE 201, for example, V2X communications are performed between the first node and the second node.

## Embodiment 3

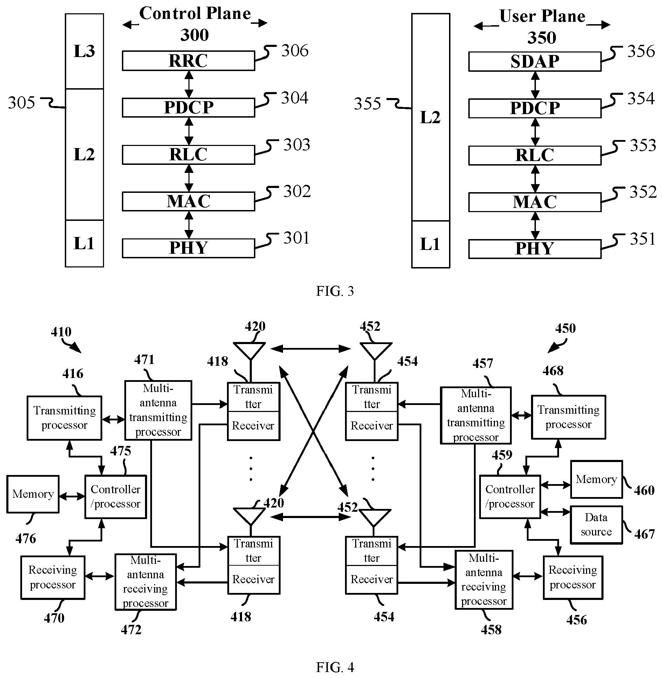

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for a first communication node (UE, gNB or an RSU in V2X) and a second communication node (gNB, UE or an RSU in V2X), or between two UEs is represented by three layers, which are a layer 1, a layer 2 and a layer 3, respectively. The layer 1 (L1) is the lowest layer and performs signal processing functions of various PHY layers. The L1 is called PHY 301 in the present application. The layer 2 (L2) 305 is above the PHY 301, and is in charge of a link between a first communication node and a second communication node, as well as two UEs via the PHY 301. L2 305 comprises a Medium Access Control (MAC) sublayer 302, a Radio Link Control (RLC) sublayer 303 and a Packet Data Convergence Protocol (PDCP) sublayer 304. All the three sublayers terminate at the second communication node. The PDCP sublayer 304 provides multiplexing among variable radio bearers and logical channels. The PDCP sublayer 304 provides security by encrypting a packet and provides support for a first communication node handover between second communication nodes. The RLC sublayer 303 provides segmentation and reassembling of a higher-layer packet, retransmission of a lost packet, and reordering of a data packet so as to compensate the disordered receiving caused by HARQ. The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. The Radio Resource Control (RRC) sublayer 306 in layer 3 (L3) of the control plane 300 is responsible for acquiring radio resources (i.e., radio bearer) and configuring the lower layer with an RRC signaling between a second communication node and a first communication node device. The radio protocol architecture of the user plane 350 comprises layer 1 (L1) and layer 2 (L2). In the user plane 350, the radio protocol architecture for the first communication node and the second communication node is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic. Although not described in FIG. 3, the first communication node may comprise several higher layers above the L2 layer 355, such as a network layer (e.g., IP layer) terminated at a P-GW of the network side and an application layer terminated at the other side of the connection (e.g., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first information in the present application is generated by the RRC sublayer 306.

In one embodiment, the first information in the present application is generated by the MAC sublayer 302.

In one embodiment, the first information in the present application is generated by the MAC sublayer 352.

In one embodiment, the first signaling in the present application is generated by the RRC sublayer 306.

In one embodiment, the first signaling in the present application is generated by the MAC sublayer 302.

In one embodiment, the first signaling in the present application is generated by the MAC sublayer 352.

In one embodiment, the first signaling in the present application is generated by the PHY 301.

In one embodiment, the first signaling in the present application is generated by the PHY 351.

## Embodiment 4

Embodiment 4 illustrates a schematic diagram of a first communication device and a second communication device in the present application, as shown in FIG. 4. FIG. 4 is a block diagram of a first communication device 410 in communication with a second communication device 450 in an access network.

The first communication device 410 comprises a controller/ processor 475, a memory 476, a receiving processor 470, a transmitting processor 416, a multi-antenna receiving processor 472, a multi-antenna transmitting processor 471, a transmitter/ receiver 418 and an antenna 420.

The second communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from the core network is provided to a controller/ processor 475. The controller/processor 475 provides a function of the L2 layer. In the transmission from the first communication device 410 to the first communication device 450, the controller/ processor 475 provides header compression, encryption, packet segmentation and reordering, and multiplexing between a logical channel and a transport channel, and radio resources allocation to the second communication device 450 based on various priorities. The controller/ processor 475 is also responsible for retransmission of a lost packet and a signaling to the second communication device 450. The transmitting processor 416 and the multi-antenna transmitting processor 471 perform various signal processing functions used for the L1 layer (that is, PHY). The transmitting processor 416 performs coding and interleaving so as to ensure an FEC (Forward Error Correction) at the second communication device 450, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and non-codebook-based precoding, and beamforming on encoded and modulated symbols to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multi-carrier symbol streams. After that the multi-antenna transmitting processor 471 performs transmission analog precoding/beamforming on the time-domain multi-carrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any the second communication device-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted on the physical channel by the first communication node 410. Next, the higher-layer data and control signal are provided to the controller/processor 459. The controller/-processor 459 performs functions of the L2 layer. The controller/processor 459 can be connected to a memory 460 that stores program code and data. The memory 460 can be called a computer readable medium. In the transmission from the first communication device 410 to the second communication device 450, the controller/ processor 459 provides demultiplexing between a transport channel and a logical channel, packet reassembling, decryption, header decompression and control signal processing so as to recover a higher-layer packet from the core network. The higher-layer packet is later provided to all protocol layers above the L2 layer, or various control signals can be provided to the L3 layer for processing.

In a transmission from the second communication device 450 to the first communication device 410, at the second communication device 450, the data source 467 is configured to provide a higher-layer packet to the controller/-

processor 459. The data source 467 represents all protocol layers above the L2 layer. Similar to a transmitting function of the first communication device 410 described in the transmission from the first communication device 410 to the second communication device 450, the controller/processor 459 performs header compression, encryption, packet segmentation and reordering, and multiplexing between a logical channel and a transport channel based on radio resources allocation so as to provide the L2 layer functions used for the user plane and the control plane. The controller/processor 459 is also responsible for retransmission of a lost packet, and a signaling to the first communication device 410. The transmitting processor 468 performs modulation mapping and channel coding. The multi-antenna transmitting processor 457 implements digital multi-antenna spatial precoding, including codebook-based precoding and non-codebook-based precoding, as well as beamforming. Following that, the generated spatial streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. In the transmission from the second communication device 450 to the first communication device 410, the controller/processor 475 provides de-multiplexing between a transport channel and a logical channel, packet reassembling, decryption, header decompression, control signal processing so as to recover a higher-layer packet from the UE 450. The higher-layer packet coming from the controller/processor 475 may be provided to the core network.

In one embodiment, the first node in the present application comprises the second communication device 450, and the second node in the present application comprises the first communication device 410.

In one subembodiment of the above embodiment, the first node is a UE, and the second node is a UE.

In one subembodiment of the above embodiment, the first node is a UE, and the second node is a relay node.

In one subembodiment of the above embodiment, the first node is a relay node, and the second node is a UE.

In one subembodiment of the above embodiment, the first node is a UE, and the second node is a base station.

In one subembodiment of the above embodiment, the first node is a relay node, and the second node is a base station.

In one subembodiment of the above embodiment, the second node is a UE, and the first node is a base station.

In one subembodiment of the above embodiment, the second node is a relay node, and the first node is a base station.

In one subembodiment of the above embodiment, the second communication device 450 comprises: at least one controller/ processor; the at least one controller/ processor is responsible for HARQ operation.

In one subembodiment of the above embodiment, the first communication device 410 comprises: at least one controller/ processor; the at least one controller/ processor is responsible for HARQ operation.

In one subembodiment of the above embodiment, the first communication device 410 comprises: at least one controller/ processor; the at least one controller/ processor is responsible for error detection using ACK and/ or NACK protocols as a way to support HARQ operation.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: receives first information and a first signaling, the first information is used to determine that a first PDCCH candidate and a second PDCCH candidate are associated with each other, and both the first PDCCH candidate and the second PDCCH candidate are used to carry the first signaling; transmits a first PUSCH, and frequency-domain resources occupied by the first PUSCH belong to a target frequency-domain resource pool; herein, the first signaling is used to determine the frequency-domain resources occupied by the first PUSCH from the target frequency-domain resource pool, the target frequency-domain resource pool is one of multiple frequency-domain resource pools, and there exist two orthogonal frequency-domain resource pools in the multiple frequency-domain resource pools that respectively overlap with a lowest-indexed CCE occupied by the first PDCCH candidate and a lowest-indexed CCE occupied by the second PDCCH candidate; a reference PDCCH candidate is one of the first PDCCH candidate or the second PDCCH candidate, and the reference PDCCH candidate is used to determine the target frequency-domain resource pool from the multiple frequency-domain resource pools.

In one subembodiment of the above embodiment, the second communication device 450 corresponds to the first node in the present application.

In one embodiment, the second communication device 450 comprises a memory that stores a computer readable instruction program. The computer readable instruction program generates an action when executed by at least one processor. The action includes: receiving first information and a first signaling, the first information being used to determine that a first PDCCH candidate and a second PDCCH candidate are associated with each other, and both the first PDCCH candidate and the second PDCCH candidate being used to carry the first signaling; transmitting a first PUSCH, and frequency-domain resources occupied by the first PUSCH belonging to a target frequency-domain resource pool; herein, the first signaling is used to determine the frequency-domain resources occupied by the first PUSCH from the target frequency-domain resource pool, the target frequency-domain resource pool is one of multiple frequency-domain resource pools, and there exist two orthogonal frequency-domain resource pools in the multiple frequency-domain resource pools that respectively overlap with a lowest-indexed CCE occupied by the first PDCCH candidate and a lowest-indexed CCE occupied by the second PDCCH candidate; a reference PDCCH candidate is one of the first PDCCH candidate or the second PDCCH candidate, and the reference PDCCH candidate is used to determine the target frequency-domain resource pool from the multiple frequency-domain resource pools.

In one subembodiment of the above embodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least: transmits first information and a first signaling, the first information is used to determine that a first PDCCH candidate and a second PDCCH candidate are associated with each other, and both the first PDCCH candidate and the second PDCCH candidate are used to carry the first signaling; receives a first PUSCH, and frequency-domain resources occupied by the first PUSCH belong to a target frequency-domain resource pool; herein, the first signaling is used to determine the frequency-domain resources occupied by the first PUSCH from the target frequency-domain resource pool, the target frequency-domain resource pool is one of multiple frequency-domain resource pools, and there exist two orthogonal frequency-domain resource pools in the multiple frequency-domain resource pools that respectively overlap with a lowest-indexed CCE occupied by the first PDCCH candidate and a lowest-indexed CCE occupied by the second PDCCH candidate; a reference PDCCH candidate is one of the first PDCCH candidate or the second PDCCH candidate, and the reference PDCCH candidate is used to determine the target frequency-domain resource pool from the multiple frequency-domain resource pools.

In one subembodiment of the above embodiment, the first communication device 410 corresponds to the second node in the present application.

In one embodiment, the first communication device 410 comprises a memory that stores a computer readable instruction program. The computer readable instruction program generates an action when executed by at least one processor. The action includes: transmitting first information and a first signaling, the first information being used to determine that a first PDCCH candidate and a second PDCCH candidate are associated with each other, and both the first PDCCH candidate and the second PDCCH candidate being used to carry the first signaling; receiving a first PUSCH, and frequency-domain resources occupied by the first PUSCH belonging to a target frequency-domain resource pool; herein, the first signaling is used to determine the frequency-domain resources occupied by the first PUSCH from the target frequency-domain resource pool, the target frequency-domain resource pool is one of multiple frequency-domain resource pools, and there exist two orthogonal frequency-domain resource pools in the multiple frequency-domain resource pools that respectively overlap with a lowest-indexed CCE occupied by the first PDCCH candidate and a lowest-indexed CCE occupied by the second PDCCH candidate; a reference PDCCH candidate is one of the first PDCCH candidate or the second PDCCH candidate, and the reference PDCCH candidate is used to determine the target frequency-domain resource pool from the multiple frequency-domain resource pools.

In one subembodiment of the above embodiment, the first communication device 410 corresponds to the second node in the present application.

In one embodiment, at least one of the antenna 452, the receiver 454, the multi-antenna receiving processor 458, the receiving processor 456, the controller / processor 459, the memory 460, or the data source 467 is used to receive the first information in the present application.

In one embodiment, at least one of the antenna 420, the transmitter 418, the multi-antenna transmitting processor 471, the transmitting processor 416, the controller/ processor 475, or the memory 476 is used to transmit the first information in the present application.

In one embodiment, at least one of the antenna 452, the receiver 454, the multi-antenna receiving processor 458, the receiving processor 456, the controller / processor 459, the memory 460, or the data source 467 is used to receive the first signaling in the present application.

In one embodiment, at least one of the antenna 420, the transmitter 418, the multi-antenna transmitting processor 471, the transmitting processor 416, the controller/ processor 475, or the memory 476 is used to transmit the first signaling in the present application.

In one embodiment, at least one of the antenna 452, the transmitter 454, the multi-antenna transmitting processor 458, the transmitting processor 468, the controller/ processor 459, the memory 460, or the data sources 467 is used to transmit the first PUSCH in the present application.

In one embodiment, at least one of the antenna 420, the receiver 418, the multi-antenna receiving processor 472, the receiving processor 470, the controller/ processor 475, or the memory 476 is used to receive the first PUSCH in the present application.

## Embodiment 5

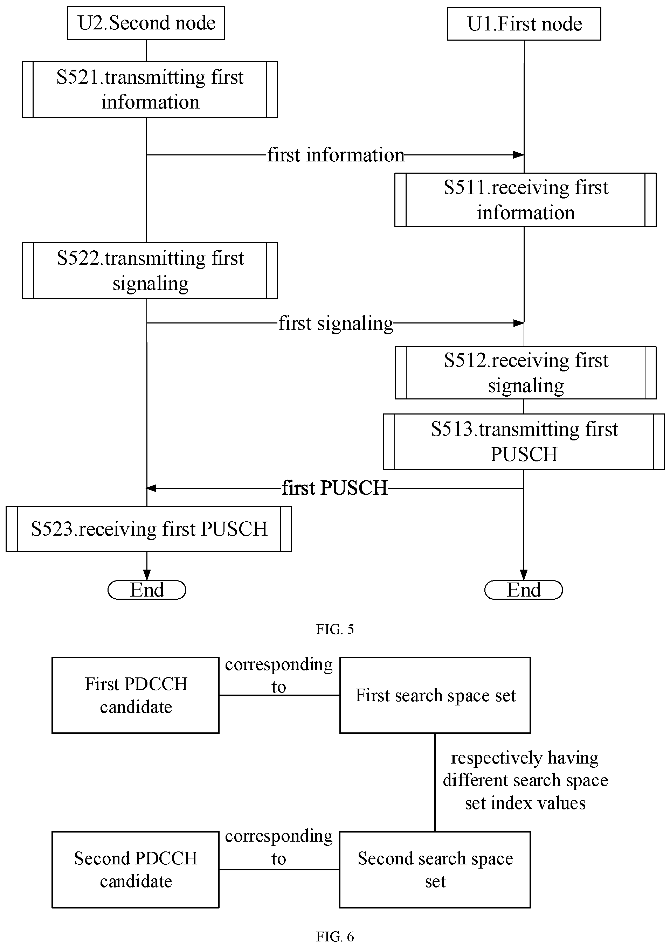

Embodiment 5 illustrates a flowchart of signal transmission according to one embodiment in the present application, as shown in FIG. 5. In FIG. 5, a first node U1 and a second node U2 are in communications via an air interface.

**The first node U1** receives first information in step S511; receives a first signaling in step S512; transmits a first PUSCH in step S513.

**The second node U2** transmits first information in step S521; transmits a first signaling in step S522; receives a first PUSCH in step S523.

In embodiment 5, the first information is used to determine that a first PDCCH candidate and a second PDCCH candidate are associated with each other, and both the first PDCCH candidate and the second PDCCH candidate are used to carry the first signaling; frequency-domain resources occupied by the first PUSCH belong to a target frequency-domain resource pool; the first signaling is used to determine the frequency-domain resources occupied by the first PUSCH from the target frequency-domain resource pool, the first signaling is used to indicate at least one interlace of RBs, the frequency-domain resources occupied by the first PUSCH are an intersection of an RB comprised in at least one interlace of RBs and the target frequency-domain resource pool, the target frequency-domain resource pool is one of multiple frequency-domain resource pools, and there exist two orthogonal frequency-domain resource pools in the multiple frequency-domain resource pools that respectively overlap with a lowest-indexed CCE occupied by the first PDCCH candidate and a lowest-indexed CCE occupied by the second PDCCH candidate; a candidate PDCCH candidate is one of the first PDCCH candidate or the second PDCCH candidate, the reference PDCCH candidate is used to determine the target frequency-domain resource pool from the multiple frequency-domain resource pool, and the target frequency-domain resource pool is a lowest-indexed frequency-domain resource pool among multiple frequency-domain resource pools that intersects with a lowest-indexed CCE occupied by the reference PDCCH candidate; the first PDCCH candidate and the second PDCCH candidate respectively correspond to a first search space set and a second search space set, and the first search space set and the second search space set respectively have different search space set index values, and both the first search space set and the second search space set are common search space sets (CSS sets); any frequency-domain resource pool in the multiple frequency-domain resource pools is an uplink resource block set, and the first signaling is DCI format 0_0 with CRC scrambled by an RNTI other than a TC-RNTI.

In one subembodiment of embodiment 3, the expression that the first information is used to determine that a first PDCCH candidate and a second PDCCH candidate are associated with each other comprises: both the first search space set and the second search space set are configured as an interrelated relation by the first information, and the first PDCCH candidate and the second PDCCH candidate have a same CCE aggregation level and index value.

In one subembodiment of embodiment 5, a reference search space set is a search space set with a smaller search space set index value in the first search space set and the second search space set, and the reference PDCCH candidate is a PDCCH candidate corresponding to the reference search space set in the first PDCCH candidate and the second PDCCH candidate.

In one embodiment, the first node U1 is the first node in the present application.

In one embodiment, the second node U2 is the second node in the present application.

In one embodiment, the first node U1 is a UE.

In one embodiment, the first node U1 is a base station.

In one embodiment, the second node U2 is a base station.

In one embodiment, the second node U2 is a UE.

In one embodiment, an air interface between the second node U2 and the first node U1 is a Uu interface.

In one embodiment, an air interface between the second node U2 and the first node U1 comprises a cellular link.

In one embodiment, an air interface between the second node U2 and the first node U1 is a PC5 interface.

In one embodiment, an air interface between the second node U2 and the first node U1 comprises a sidelink.

In one embodiment, an air interface between the second node U2 and the first node U1 comprises a radio interface between a base station and a UE.

In one embodiment, an air interface between the second node U2 and the first node U1 comprises a radio interface between a satellite and a UE.

In one embodiment, an air interface between the second node U2 and the first node U1 comprises a radio interface between a UE and a UE.

In one embodiment, there exists one or multiple mutually orthogonal frequency-domain resource pools among the multiple frequency-domain resource pools being intersected with a lowest-indexed CCE occupied by the reference PDCCH candidate.

Typically, the first PDCCH candidate and the second PDCCH candidate respectively correspond to a first search space set and a second search space set, and the first search space set and the second search space set respectively have different search space set index values; a reference search space set is a search space set with a smaller search space set index value in the first search space set and the second search space set, and the reference PDCCH candidate is a PDCCH candidate corresponding to the reference search space set in the first PDCCH candidate and the second PDCCH candidate.

### Embodiment 6

Embodiment 6 illustrates a schematic diagram of relations among a first PDCCH candidate, a second PDCCH candidate, a first search space set and a second search space set according to one embodiment of the present application, as shown in FIG. 6.

In embodiment 6, the first PDCCH candidate and the second PDCCH candidate respectively correspond to a first search space set and a second search space set, and the first search space set and the second search space set respectively have different search space set index values.

In one embodiment, the first PDCCH candidate and the second PDCCH candidate respectively belong to the first search space set and the second search space set.

In one embodiment, the first PDCCH candidate and the second PDCCH candidate are respectively PDCCH candidates defined in a configuration of the first search space set and a configuration of the second search space set.

In one embodiment, the first PDCCH candidate and the second PDCCH candidate are respectively configured for the first search space set and the second search space set.

In one embodiment, the first search space set and the second search space set are respectively associated with different CORESETs (CORESETs).

In one embodiment, the first search space set and the second search space set adopt a same search space set type (UE-specific search space set (USS set), or common search space set).

In one embodiment, the first search space set and the second search space set are both search space sets.

In one embodiment, both the first search space set and the second search space set are common search space sets (CSS sets).

In one embodiment, the first search space set and the second search space set are both Type3-PDCCH CSS sets.

In one embodiment, the first search space set and the second search space set are configured with a same number of PDCCH candidate(s) for each CCE aggregation level.

In one embodiment, the CCE aggregation level in the present application is one of 4, 8, and 16.

In one embodiment, the CCE aggregation level in the present application is one of 1, 2, 4, 8, and 16.

In one embodiment, the CCE aggregation level in the present application is one of 1, 2, 4, 8, 16 and 32.

In one embodiment, the CCE aggregation level in the present application is one of 1, 2, 4, 8, 16, 32 and 64.

In one embodiment, the first search space set and the second search space set have a same PDCCH monitoring periodicity, a same PDCCH monitoring offset, and a same duration.

In one embodiment, the first search space set and the second search space set have a same number of PDCCH monitoring occasion(s) in a same slot; in the same slot, an n-th PDCCH monitoring occasion of the first search space set is associated with an n-th PDCCH monitoring occasion of the second search space set, and the n is a positive integer not greater than a number of PDCCH monitoring occasion(s) in the same slot for the first search space set.

In one embodiment, the search space set comprises a search space.

In one embodiment, the search space set comprises multiple search spaces.

In one embodiment, the search space set comprises multiple PDCCH monitoring occasions.

In one embodiment, the search space set is used to define multiple PDCCH monitoring occasions.

In one embodiment, a search space set index value of the search space set is configured by a searchSpaceId parameter.

### Embodiment 7

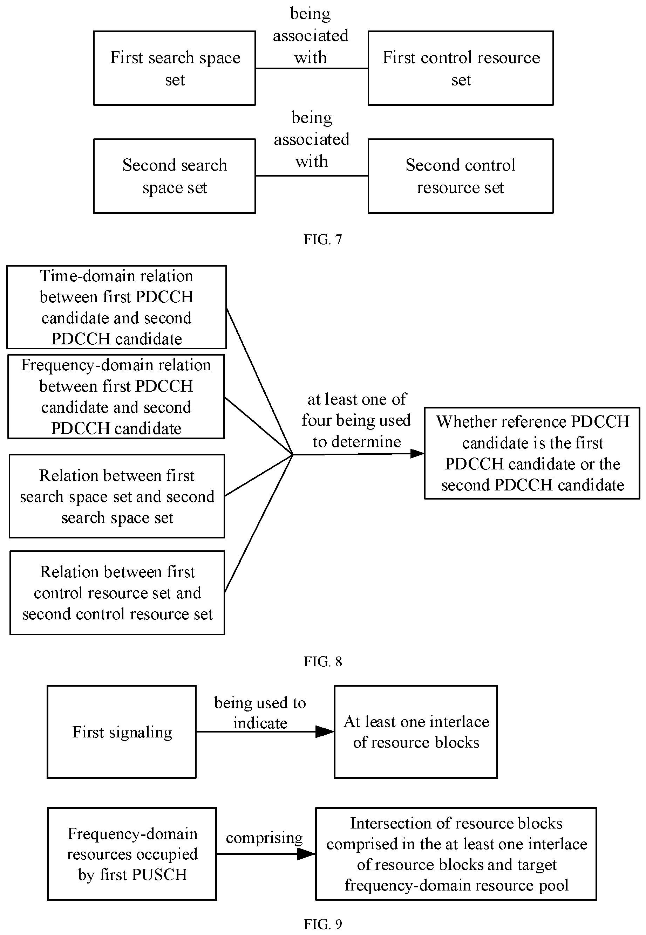

Embodiment 7 illustrates a schematic diagram of relations among a first search space set, a second search space set, a first CORESET and a second CORESET according to one embodiment of the present application, as shown in FIG. 7.

In embodiment 7, the first search space set and the second search space set in the present application are respectively associated with the first CORESET and the second CORESET.

In one embodiment, the first CORESET is configured by an information element ControlResourceSet.

In one embodiment, the second CORESET is configured by an information element ControlResourceSet.

In one embodiment, the first CORESET and the second CORESET are both CORESETs (CORESETs).

In one embodiment, the first CORESET and the second CORESET have different controllResourceSetIds.

In one embodiment, the first CORESET and the second CORESET are a same CORESET.

In one embodiment, the first CORESET and the second CORESET are respectively different CORESETs.

In one embodiment, the first search space set in the present application and the second search space set in the present application are respectively associated with the first CORESET and the second CORESET through higher-layer signaling configuration.

In one embodiment, the first search space set in the present application and the second search space set in the present application are respectively associated with the first CORESET and the second CORESET through RRC signaling configuration.

In one embodiment, the first search space set in the present application is associated with the first CORESET through a configuration of an information element SearchSpace.

In one embodiment, the second search space set in the present application is associated with the second CORESET through a configuration of an information element SearchSpace.

In one embodiment, frequency-domain resources occupied by the first PDCCH candidate and frequency-domain resources occupied by the second PDCCH candidate respectively belong to the first CORESET and the second CORESET.

## Embodiment 8

Embodiment 8 illustrates a schematic diagram of determining a PDCCH candidate according to one embodiment of the present application, as shown in FIG. 8.

In embodiment 8, at least one of a time-domain relation between the first PDCCH candidate and the second PDCCH candidate, a frequency-domain relation between the first PDCCH candidate and the second PDCCH candidate, a relation between the first search space set in the present application and the second search space set in the present application, or a relation between the first CORESET in the present application and the second CORESET in the present application is used to determine whether the reference PDCCH candidate is the first PDCCH candidate or the second PDCCH candidate.

In one embodiment, a reference search space set is a search space set with a larger search space set index value between the first search space set and the second search space set, and the reference PDCCH candidate is a PDCCH candidate corresponding to the reference search space set in the first PDCCH candidate and the second PDCCH candidate.

In one embodiment, the reference PDCCH candidate is either the first PDCCH candidate or the second PDCCH candidate with a later end time in time domain.

In one embodiment, the reference PDCCH candidate is either the first PDCCH candidate or the second PDCCH candidate with an earlier end time in time domain.

In one embodiment, the reference PDCCH candidate is either the first PDCCH candidate or the second PDCCH candidate with a later start time in time domain.

In one embodiment, the reference PDCCH candidate is either the first PDCCH candidate or the second PDCCH candidate with an earlier start time in time domain.

In one embodiment, the reference PDCCH candidate is one of the first PDCCH candidate and the second PDCCH candidate occupying a starting RB with a smaller index in frequency domain.

In one embodiment, the reference PDCCH candidate is one of the first PDCCH candidate and the second PDCCH candidate occupying a starting RB with a larger index in frequency domain.

In one embodiment, a reference CORESET is a CORESET with a larger CORESET index value between the first CORESET and second CORESET, and the reference PDCCH candidate is a PDCCH candidate corresponding to the reference CORESET between the first PDCCH candidate and the second PDCCH candidate.

In one embodiment, a reference CORESET is a CORESET with a smaller CORESET index value between the first CORESET and second CORESET, and the reference PDCCH candidate is a PDCCH candidate corresponding to the reference CORESET between the first PDCCH candidate and the second PDCCH candidate.

In one embodiment, a reference CORESET is a CORESET occupying significant frequency domain between the first CORESET and the second CORESET, and the reference PDCCH candidate is a PDCCH candidate corresponding to the reference CORESET between the first PDCCH candidate and the second PDCCH candidate.

In one embodiment, a reference CORESET is a CORESET occupying less frequency domain between the first CORESET and the second CORESET, and the reference PDCCH candidate is a PDCCH candidate corresponding to the reference CORESET between the first PDCCH candidate and the second PDCCH candidate.

In one embodiment, the first CORESET and the second CORESET respectively have different coresetPoolIndex values, a reference CORESET is a CORESET with a less coresetPoolIndex value between the first CORESET and the second CORESET, and the reference PDCCH candidate is a PDCCH candidate corresponding to the reference CORESET between the first PDCCH candidate and the second PDCCH candidate.

In one embodiment, the first CORESET and the second CORESET respectively have different coresetPoolIndex values, a reference CORESET is a CORESET with a larger coresetPoolIndex value between the first CORESET and the second CORESET, and the reference PDCCH candidate is a PDCCH candidate corresponding to the reference CORESET between the first PDCCH candidate and the second PDCCH candidate.

## Embodiment 9

Embodiment 9 illustrates a schematic diagram of relations among a first signaling, at least one interlace of RBs, a target frequency-domain resource pool and frequency-domain resources occupied by a first PUSCH according to one embodiment of the present application, as shown in FIG. 9.

In embodiment 9, the first signaling is used to indicate at least one interlace of resource blocks, and the frequency-domain resources occupied by the first PUSCH are an intersection of resource blocks comprised in the at least one interlace of resource blocks and the target frequency-domain resource pool.

In one embodiment, the first signaling is used to explicitly indicate the at least one interlace of RBs.

In one embodiment, the first signaling is used to implicitly indicate the at least one interlace of RBs.

In one embodiment, the first signaling comprises a first field, and the first field in the first signaling is used to indicate the at least one interlace of RBs.

In one embodiment, the first signaling comprises a first field, and the first field in the first signaling is used to explicitly indicate the at least one interlace of RBs.

In one embodiment, the first signaling comprises a first field, the first field in the first signaling is used to indicate a Resource Indication Value (RIV), and the RIV is mapped to the at least one interlace of RBs based on predefined rule.

In one embodiment, for any non-negative integer m less than M, an interlace m of RBs consists of common resource blocks {m, M+m, 2M+m, 3M+m, ...}, where M is a positive integer; the first signaling comprises a first field, and the first field in the first signaling is used to indicate the at least one interlace of RBs from {interlace 0 of RBs, interlace 1 of RBs, ..., interlace M-1 of RBs}.

In one subembodiment of the above embodiment, M is equal to 5.

In one subembodiment of the above embodiment, M is equal to 10.

In one subembodiment of the above embodiment, M is equal to one of 2 or 3.

In one embodiment, the first field comprises 5 bits.

In one embodiment, the first field comprises 6 bits.

In one embodiment, the first field comprises at least one and not exceeding 64 bits.

In one embodiment, the first field is a frequency domain resource assignment (FDRA) field.

In one embodiment, a name of the first field comprises at least one of Frequency, domain, resource, or assignment.

In one embodiment, the interlace of RBs comprises at least one resource block.

In one embodiment, the interlace of RBs comprises multiple resource blocks.

In one embodiment, the interlace of RBs comprises multiple discontinuous resource blocks in frequency domain.

In one embodiment, the interlace of RBs comprises multiple resource blocks arranged at equal intervals in frequency domain.

In one embodiment, the interlace of RBs comprises multiple discontinuous resource blocks arranged at equal intervals in frequency domain.

In one embodiment, the interlace of RBs comprises multiple common resource blocks.

In one embodiment, the interlace of RBs comprises multiple discontinuous common resource blocks in frequency domain.

In one embodiment, the interlace of RBs comprises multiple common resource blocks arranged at equal intervals in frequency domain.

In one embodiment, the interlace of RBs comprises multiple discontinuous common resource blocks arranged at equal intervals in frequency domain.

In one embodiment, for the definition of the interlace of RBs, refer to chapter 4. 4. 4. 6 of 3GPP TS 38. 211.

In one embodiment, the at least one interlace of RBs is one or multiple interlace(s) of resource blocks.

In one embodiment, the expression that an intersection of a resource block comprised in the at least one interlace of RBs and the target frequency-domain resource pool refers to: an intersection of all resource blocks comprised in the at least one interlace of RBs and the target frequency-domain resource pool in frequency domain.

In one embodiment, the frequency-domain resources occupied by the first PUSCH belong to both the at least one interlace of RBs and the target frequency-domain resource pool.

## Embodiment 10

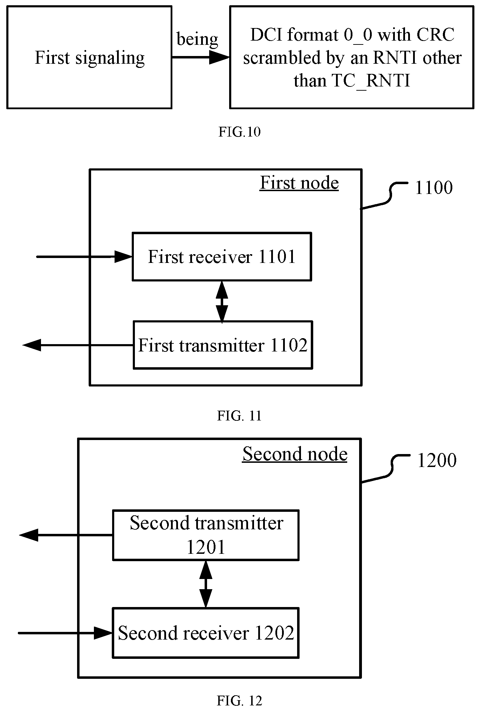

Embodiment 10 illustrates an illustration schematic diagram of a first signaling according to one embodiment of the present application, as shown in FIG. 10.

In embodiment 10, the first signaling is DCI format 0_0 with CRC scrambled by an RNTI other than a TC-RNTI.

In one embodiment, the first signaling is DCI format 0_0 with CRC scrambled by a C-RNTI.

In one embodiment, the first signaling is DCI format 0_0 with CRC scrambled by an MCS-C-RNTI.

In one embodiment, the first signaling is DCI format 0_0 with CRC scrambled by a CS-RNTI.

In one embodiment, the first signaling is DCI format 0_0 with CRC scrambled by a G-RNTI.

In one embodiment, the first signaling is detected in a CSS.

In one embodiment, the first signaling is DCI format 0_0 with CRC scrambled by an RNTI other than a TC-RNTI detected in a CSS.

In one embodiment, the first signaling is a fallback DCI format.

## Embodiment 11

Embodiment 11 illustrates a structure block diagram of a processor in a first node, as shown in FIG. 11. In FIG. 11, a processor 1100 in a first node comprises a first receiver 1101 and a first transmitter 1102.

In one embodiment, the first node 1100 is a UE.

In one embodiment, the first node 1100 is a relay node.

In one embodiment, the first node 1100 is a vehicle-mounted communication device.

In one embodiment, the first node 1100 is a UE that supports V2X communications.

In one embodiment, the first node 1100 is a relay node that supports V2X communications.

In one embodiment, the first receiver 1101 comprises at least one of the antenna 452, the receiver 454, the multi-antenna receiving processor 458, the receiving processor 456, the controller/ processor 459, the memory 460 or the data source 467 in FIG. 4 of the present application.

In one embodiment, the first receiver 1101 comprises at least the first five of the antenna 452, the receiver 454, the multi-antenna receiving processor 458, the receiving processor 456, the controller/ processor 459, the memory 460 and the data source 467 in FIG. 4 of the present application.

In one embodiment, the first receiver 1101 comprises at least the first four of the antenna 452, the receiver 454, the multi-antenna receiving processor 458, the receiving processor 456, the controller/ processor 459, the memory 460 and the data source 467 in FIG. 4 of the present application.

In one embodiment, the first receiver 1101 comprises at least the first three of the antenna 452, the receiver 454, the multi-antenna receiving processor 458, the receiving processor 456, the controller/ processor 459, the memory 460 and the data source 467 in FIG. 4 of the present application.

In one embodiment, the first receiver 1101 comprises at least the first two of the antenna 452, the receiver 454, the multi-antenna receiving processor 458, the receiving processor 456, the controller/ processor 459, the memory 460 and the data source 467 in FIG. 4 of the present application.

In one embodiment, the first transmitter 1102 comprises at least one of the antenna 452, the transmitter 454, the multi-antenna transmitting processor 457, the transmitting processor 468, the controller/ processor 459, the memory 460, or the data source 467 in FIG. 4 of the present application.

In one embodiment, the first transmitter 1102 comprises at least first five of the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter 1102 comprises at least first four of the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter 1102 comprises at least first three of the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter 1102 comprises at least first two of the antenna 452, the transmitter 454, the multi-antenna transmitting processor 457, the transmitting processor 468, the controller/ processor 459, the memory 460, and the data source 467 in FIG. 4 of the present application.

In embodiment 11, the first receiver 1101 receives first information and a first signaling, the first information is used to determine that a first PDCCH candidate and a second PDCCH candidate are associated with each other, and both the first PDCCH candidate and the second PDCCH candidate are used to carry the first signaling; the first transmitter 1102 transmits a first PUSCH, and frequency-domain resources occupied by the first PUSCH belong to a target frequency-domain resource pool; herein, the first signaling is used to determine the frequency-domain resources occupied by the first PUSCH from the target frequency-domain resource pool, the target frequency-domain resource pool is one of multiple frequency-domain resource pools, and there exist two orthogonal frequency-domain resource pools in the multiple frequency-domain resource pools that respectively overlap with a lowest-indexed CCE occupied by the first PDCCH candidate and a lowest-indexed CCE occupied by the second PDCCH candidate; a reference PDCCH candidate is one of the first PDCCH candidate or the second PDCCH candidate, and the reference PDCCH candidate is used to determine the target frequency-domain resource pool from the multiple frequency-domain resource pools.

In one embodiment, the target frequency-domain resource pool is a lowest-indexed frequency-domain resource pool among multiple frequency-domain resource pools that intersects with a lowest-indexed CCE occupied by the reference PDCCH candidate.

In one embodiment, the first PDCCH candidate and the second PDCCH candidate respectively correspond to a first search space set and a second search space set, and the first search space set and the second search space set respectively have different search space set index values.

In one embodiment, a reference search space set is a search space set with a smaller search space set index value in the first search space set and the second search space set, and the reference PDCCH candidate is a PDCCH candidate corresponding to the reference search space set in the first PDCCH candidate and the second PDCCH candidate.

In one embodiment, the first signaling is used to indicate at least one interlace of resource blocks, and the frequency-domain resources occupied by the first PUSCH are an intersection of resource blocks comprised in the at least one interlace of resource blocks and the target frequency-domain resource pool.

In one embodiment, any frequency-domain resource pool among the multiple frequency-domain resource pools is an uplink resource block set.

In one embodiment, the first signaling is DCI format 0_0 with CRC scrambled by an RNTI other than a TC-RNTI.

In one embodiment, the first receiver 1101 receives first information and a first signaling, the first information is used to determine that a first PDCCH candidate and a second PDCCH candidate are associated with each other, and both the first PDCCH candidate and the second PDCCH candidate are used to carry the first signaling; the first transmitter 1102 transmits a first PUSCH, and frequency-domain resources occupied by the first PUSCH belong to a target frequency-domain resource pool; herein, the first signaling is used to indicate at least one interlace of RBs, the frequency-domain resources occupied by the first PUSCH are an intersection of an RB comprised in at least one interlace of RBs and the target frequency-domain resource pool, the target frequency-domain resource pool is one of multiple frequency-domain resource pools, any of the multiple frequency-domain resource pools is an uplink RB set, and there exist two orthogonal frequency-domain resource pools in the multiple frequency-domain resource pools that respectively overlap with a lowest-indexed CCE occupied by the first PDCCH candidate and a lowest-indexed CCE occupied by the second PDCCH candidate; a candidate PDCCH candidate is one of the first PDCCH candidate or the second PDCCH candidate, the target frequency-domain resource pool is a lowest-indexed frequency-domain resource pool among multiple frequency-domain resource pools that intersects with a lowest-indexed CCE occupied by the reference PDCCH candidate.

In one subembodiment of the above embodiment, the first signaling is DCI format 0_0 with CRC scrambled by an RNTI other than a TC-RNTI.

In one subembodiment of the above embodiment, the first signaling is DCI format 0_0 with CRC scrambled by an RNTI other than a TC-RNTI detected in a CSS.

In one subembodiment of the above embodiment, the first PDCCH candidate and the second PDCCH candidate respectively correspond to the first CORESET and the second CORESET, the first CORESET and the second CORESET respectively have different coresetPoolIndex values, a reference CORESET is a CORESET with a smaller coresetPoolIndex value between the first CORESET and the second CORESET, and the reference PDCCH candidate is a PDCCH candidate corresponding to the reference CORESET between the first PDCCH candidate and the second PDCCH candidate.

In one subembodiment of the above embodiment, the first PDCCH candidate and the second PDCCH candidate respectively correspond to a first search space set and a second search space set, and the first search space set and the second search space set respectively have different search space set index values; a reference search space set is a search space set with a smaller search space set index value in the first search space set and the second search space set, and the reference PDCCH candidate is a PDCCH candidate corresponding to the reference search space set in the first PDCCH candidate and the second PDCCH candidate.

## Embodiment 12

Embodiment 12 illustrates a structure block diagram of a processor in a second node, as shown in FIG. 12. In FIG. 12, a processor 1200 in a second node comprises a second transmitter 1201 and a second receiver 1202.

In one embodiment, the second node 1200 is a UE.

In one embodiment, the second node 1200 is a base station.

In one embodiment, the second node 1200 is a relay node.

In one embodiment, the second node 1200 is a vehicle-mounted communication device.

In one embodiment, the second node 1200 is a UE that supports V2X communications.

In one embodiment, the second transmitter 1201 comprises at least one of the antenna 420, the transmitter 418, the multi-antenna transmitting processor 471, the transmitting processor 416, the controller/ processor 475 or the memory 476 in FIG. 4 of the present application.

In one embodiment, the second transmitter 1201 comprises at least first five of the antenna 420, the transmitter 418, the multi-antenna transmitting processor 471, the transmitting processor 416, the controller/ processor 475 and the memory 476 in FIG. 4 of the present application.

In one embodiment, the second transmitter 1201 comprises at least first four of the antenna 420, the transmitter 418, the multi-antenna transmitting processor 471, the transmitting processor 416, the controller/ processor 475 and the memory 476 in FIG. 4 of the present application.

In one embodiment, the second transmitter 1201 comprises at least first three of the antenna 420, the transmitter 418, the multi-antenna transmitting processor 471, the transmitting processor 416, the controller/ processor 475 and the memory 476 in FIG. 4 of the present application.

In one embodiment, the second transmitter 1201 comprises at least first two of the antenna 420, the transmitter 418, the multi-antenna transmitting processor 471, the transmitting processor 416, the controller/ processor 475 and the memory 476 in FIG. 4 of the present application.

In one embodiment, the second receiver 1202 comprises at least one of the antenna 420, the receiver 418, the multi-antenna receiving processor 472, the receiving processor 470, the controller/ processor 475 or the memory 476 in FIG. 4 of the present application.

In one embodiment, the second receiver 1202 comprises at least first five of the antenna 420, the receiver 418, the multi-antenna receiving processor 472, the receiving processor 470, the controller/ processor 475 and the memory 476 in FIG. 4 of the present application.

In one embodiment, the second receiver 1202 comprises at least first four of the antenna 420, the receiver 418, the multi-antenna receiving processor 472, the receiving processor 470, the controller/ processor 475 and the memory 476 in FIG. 4 of the present application.

In one embodiment, the second receiver 1202 comprises at least first three of the antenna 420, the receiver 418, the multi-antenna receiving processor 472, the receiving processor 470, the controller/ processor 475 and the memory 476 in FIG. 4 of the present application.

In one embodiment, the second receiver 1202 comprises at least first two of the antenna 420, the receiver 418, the multi-antenna receiving processor 472, the receiving processor 470, the controller/ processor 475 and the memory 476 in FIG. 4 of the present application.

In embodiment 12, the second transmitter 1201 transmits first information and a first signaling, the first information is used to determine that a first PDCCH candidate and a second PDCCH candidate are associated with each other, and both the first PDCCH candidate and the second PDCCH candidate are used to carry the first signaling; the second receiver 1202 receives a first PUSCH, and frequency-domain resources occupied by the first PUSCH belong to a target frequency-domain resource pool; herein, the first signaling is used to determine the frequency-domain resources occupied by the first PUSCH from the target frequency-domain resource pool, the target frequency-domain resource pool is one of multiple frequency-domain resource pools, and there exist two orthogonal frequency-domain resource pools in the multiple frequency-domain resource pools that respectively overlap with a lowest-indexed CCE occupied by the first PDCCH candidate and a lowest-indexed CCE occupied by the second PDCCH candidate; a reference PDCCH candidate is one of the first PDCCH candidate or the second PDCCH candidate, and the reference PDCCH candidate is used to determine the target frequency-domain resource pool from the multiple frequency-domain resource pools.

In one embodiment, the target frequency-domain resource pool is a lowest-indexed frequency-domain resource pool among multiple frequency-domain resource pools that intersects with a lowest-indexed CCE occupied by the reference PDCCH candidate.

In one embodiment, the first PDCCH candidate and the second PDCCH candidate respectively correspond to a first search space set and a second search space set, and the first search space set and the second search space set respectively have different search space set index values.

In one embodiment, a reference search space set is a search space set with a smaller search space set index value in the first search space set and the second search space set, and the reference PDCCH candidate is a PDCCH candidate corresponding to the reference search space set in the first PDCCH candidate and the second PDCCH candidate.

In one embodiment, the first signaling is used to indicate at least one interlace of resource blocks, and the frequency-domain resources occupied by the first PUSCH are an intersection of resource blocks comprised in the at least one interlace of resource blocks and the target frequency-domain resource pool.

In one embodiment, any frequency-domain resource pool among the multiple frequency-domain resource pools is an uplink resource block set.

In one embodiment, the first signaling is DCI format 0_0 with CRC scrambled by an RNTI other than a TC-RNTI.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, tele-controlled aircrafts and other wireless communication devices. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, tele-controlled aircrafts and other wireless communication devices. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, tele-controlled aircrafts, etc. The base station or network side equipment in the present application includes but is not limited to macro-cellular base stations, micro-cellular base stations, home base stations, relay base station, eNB, gNB, Transmitter Receiver Point (TRP), GNSS, relay satellites, satellite base stations, space base stations, test device, test equipment, test instrument and other radio communication equipment.

The currently disclosed embodiments, in any case, are therefore to be regarded only in an illustrative, rather than a restrictive sense. The scope of invention shall be determined by the claims attached.

**Claims**

1. A user equipment, UE, comprising:

   a receiver configured to:

   receive, from a base station, information indicating that a first search space of a first Physical Downlink Control Channel, PDCCH, candidate and a second search space of a second PDCCH candidate are associated with each other, wherein the first PDCCH candidate and the second PDCCH candidate are candidates for downlink control information, DCI, reception; and
   receive, from the base station, the DCI; and

   a transmitter configured to transmit a Physical Uplink Shared Channel, PUSCH, using frequency-domain resources of a frequency-domain resource pool;
   wherein the frequency-domain resource pool is one of a plurality of frequency-domain resource pools, wherein a first frequency-domain resource pool of the plurality of frequency-domain resource pools overlaps with a lowest-indexed Control Channel Element, CCE, of the first PDCCH candidate and a second frequency-domain resource pool of the plurality of frequency-domain resource pools overlaps with a lowest-indexed CCE of the second PDCCH candidate, and
   wherein the UE is configured to determine the frequency-domain resource pool from the plurality of frequency-domain resource pools based on one of the first PDCCH candidate or the second PDCCH candidate.

2. The UE according to claim 1, wherein the frequency-domain resource pool is a lowest-indexed frequency-domain resource pool of the plurality of multiple frequency-domain resource pools that intersects with a lowest-indexed CCE occupied by the one of the first PDCCH candidate or the second PDCCH candidate.

3. The UE according to claim 1 or 2, wherein a reference Control Resource Set, CORESET, is a CORESET that has a lower index value between a first CORESET and a second CORESET, and the one of the first PDCCH candidate or the second PDCCH candidate is a PDCCH candidate corresponding to the reference CORESET.

4. The UE according to claim 3, wherein the first PDCCH candidate and the second PDCCH candidate respectively correspond to a first search space set and a second search space set, and the first search space set and the second search space set respectively have different search space set index values; the first search space set and the second search space set are respectively associated with the first CORESET and the second CORESET.

5. The UE according to claim 4, wherein both the first search space set and the second search space set are common search space sets, CSS sets; the information indicates that the first PDCCH candidate and the second PDCCH candidate are configured to be associated with each other.

6. The UE according to any of claims 1-5, wherein the signaling is used to indicate at least one interlace of resource blocks, RBs, and the frequency-domain resources of the PUSCH are an intersection of RBs comprised in the at least one interlace of RBs and the frequency-domain resource pool; any of the multiple frequency-domain resource pools is an uplink RB set.

7. A base station, comprising:

   a transmitter configured to:

   transmit information indicating that a first search space of a first PDCCH candidate and a second search space of a second PDCCH candidate are associated with each other, wherein the first PDCCH candidate and the second PDCCH candidate are candidates for DCI reception; and
   transmit the DCI; and

   a receiver configured to receive a PUSCH on frequency-domain resources of a frequency-domain resource pool; wherein the frequency-domain resource pool is one of a plurality of frequency-domain resource pools, wherein a first frequency-domain resource pool of the plurality of frequency-domain resource pools overlaps with a lowest-indexed CCE of the first PDCCH candidate and a second frequency-domain resource pool of the plurality of frequency-domain resource pools overlaps with a lowest-indexed CCE of the second PDCCH candidate, and wherein the frequency-domain resource pool is determined from the plurality of frequency-domain resource pools based on one of the first PDCCH candidate or the second PDCCH candidate.

8. The base station according to claim 7, wherein the frequency-domain resource pool is a lowest-indexed frequency-domain resource pool of the plurality of frequency-domain resource pools that intersects with a lowest-indexed CCE occupied by the one of the first PDCCH candidate or the second PDCCH candidate.

9. The base station according to claim 7 or 8, wherein a reference CORESET is a CORESET that has a lower index value between a first CORESET and a second CORESET, and the one of the first PDCCH candidate or the second PDCCH candidate is a PDCCH candidate corresponding to the reference CORESET; the first PDCCH candidate and the second PDCCH candidate respectively correspond to a first search space set and a second search space set, and the first search space set and the second search space set respectively have different search space set index values; the first search space set and the second search space set are respectively associated with the first CORESET and the second CORESET; both the first search space set and the second search space set are common search space sets, CSS sets; the signaling is used to indicate at least one interlace of RBs, and the frequency-domain resources occupied by the PUSCH are an intersection of RBs comprised in the at least one interlace of RBs and the frequency-domain resource pool; any of the plurality of frequency-domain resource pools is an uplink RB set.

10. A method, comprising:

    receiving, from a base station, information indicating that a first search space of a first PDCCH candidate and a second search space of a second PDCCH candidate are associated with each other, wherein the first PDCCH candidate and the second PDCCH candidate are candidates for DCI;
    receiving, from the base station, the DCI;
    transmitting a PUSCH using frequency-domain resources of a frequency-domain resource pool,
    wherein the frequency-domain resource pool is one of a plurality of frequency-domain resource pools, wherein a first frequency-domain resource pool of the plurality of frequency-domain resource pools overlaps with a lowest-indexed CCE occupied of the first PDCCH candidate and a second frequency-domain resource pool of the plurality of frequency-domain resource pools overlaps with a lowest-indexed CCE of the second PDCCH candidate; and

determining the frequency-domain resource pool from the plurality of frequency-domain resource pools based on one of the first PDCCH candidate or the second PDCCH candidate.

11. The method according to claim 10, wherein the frequency-domain resource pool is a lowest-indexed frequency-domain resource pool of the plurality of frequency-domain resource pools that intersects with a lowest-indexed CCE occupied by the one of the first PDCCH candidate or the second PDCCH candidate.

12. The method according to claim 10 or 11, wherein a reference CORESET is a CORESET that has a lower index value between a first CORESET and a second CORESET, and the one of the first PDCCH candidate or the second PDCCH candidate is a PDCCH candidate corresponding to the reference CORESET.

13. The method according to claim 12, wherein the first PDCCH candidate and the second PDCCH candidate respectively correspond to a first search space set and a second search space set, and the first search space set and the second search space set respectively have different search space set index values; the first search space set and the second search space set are respectively associated with the first CORESET and the second CORESET.

14. The method according to claim 13, wherein both the first search space set and the second search space set are common search space sets, CSS sets; the information indicates that the first PDCCH candidate and the second PDCCH candidate are configured to be associated with each other.

15. The method according to any of claims 10-14, wherein the signaling is used to indicate at least one interlace of RBs, and the frequency-domain resources of the PUSCH are an intersection of RBs comprised in the at least one interlace of RBs and the frequency-domain resource pool; any of the multiple frequency-domain resource pools is an uplink RB set.

**Patentansprüche**

1. Benutzervorrichtung, UE, umfassend:

einen Empfänger, der eingerichtet ist:

von einer Basisstation Informationen zu empfangen, die angeben, dass ein erster Suchraum eines ersten Kandidaten eines physischen Downlink-Steuerkanals, PDCCH, und ein zweiter Suchraum eines zweiten PDCCH-Kandidaten miteinander assoziiert sind, wobei der erste PDCCH-Kandidat und der zweite PDCCH-Kandidat Kandidaten für einen Empfang von Downlink-Steuerinformationen, DCI, sind; und
von der Basisstation die DCI zu empfangen; und

einen Sender, der eingerichtet ist, einen physischen gemeinsam genutzten Uplink-Kanal, PUSCH, unter Verwendung von Frequenzdomänenressourcen eines Frequenzdomänenressourcenpools zu übertragen;
wobei der Frequenzdomänenressourcenpool einer von einer Mehrzahl von Frequenzdomänenressourcenpools ist, wobei ein erster Frequenzdomänenressourcenpool der Mehrzahl von Frequenzdomänenressourcenpools mit einem Steuerkanalelement, CCE, niedrigsten Indexes des ersten PDCCH-Kandidaten überlappt und ein zweiter Frequenzdomänenressourcenpool der Mehrzahl von Frequenzdomänenressourcenpools mit einem CCE niedrigsten Indexes des zweiten PDCCH-Kandidaten überlappt, und
wobei die UE eingerichtet ist, den Frequenzdomänenressourcenpool aus der Mehrzahl von Frequenzdomänenressourcenpools basierend auf einem aus dem ersten PDCCH-Kandidaten und dem zweiten PDCCH-Kandidaten zu bestimmen.

2. UE nach Anspruch 1, wobei der Frequenzdomänenressourcenpool ein Frequenzdomänenressourcenpool niedrigsten Indexes aus der Mehrzahl von Frequenzdomänenressourcenpools ist, der sich mit einem CCE niedrigsten Indexes überschneidet, das von dem einen aus dem ersten PDCCH-Kandidaten und dem zweiten PDCCH-Kandidaten belegt wird.

3. UE nach Anspruch 1 oder 2, wobei ein Referenz-Control-Resource-Set, CORESET, ein CORESET ist, das zwischen einem ersten CORESET und einem zweiten CORESET einen niedrigeren Indexwert aufweist, und der eine aus dem ersten PDCCH-Kandidaten und dem zweiten PDCCH-Kandidaten ein PDCCH-Kandidat ist, der dem Referenz-CORESET entspricht.

4. UE nach Anspruch 3, wobei der erste PDCCH-Kandidat und der zweite PDCCH-Kandidat jeweils einem ersten Suchraumsatz und einem zweiten Suchraumsatz entsprechen und der erste Suchraumsatz und der zweite Suchraumsatz jeweils unterschiedliche Suchraumsatz-Indexwerte aufweisen; der erste Suchraumsatz und der zweite Suchraumsatz jeweils mit dem ersten CORESET und dem zweiten CORESET assoziiert sind.

5. UE nach Anspruch 4, wobei sowohl der erste Suchraumsatz als auch der zweite Suchraumsatz gemeinsame Suchraumsätze, CSS-Sätze, sind; die Informationen angeben, dass der erste PDCCH-Kandidat und der zweite PDCCH-Kandidat konfiguriert sind, miteinander assoziiert zu sein.

6. UE nach einem der Ansprüche 1 bis 5, wobei die Signalisierung verwendet wird, um mindestens eine Verschachtelung von Ressourcenblöcken, RBs, anzugeben, und die Frequenzdomänenressourcen des PUSCH eine Schnittmenge aus RBs, die in der mindestens einen Verschachtelung von RBs enthalten sind, und dem Frequenzdomänenressourcenpool sind; jeder der mehreren Frequenzdomänenressourcenpools ein Uplink-RB-Satz ist.

7. Basisstation, umfassend:

    einen Sender, der eingerichtet ist:

        Informationen zu übertragen, die angeben, dass ein erster Suchraum eines ersten PDCCH-Kandidaten und ein zweiter Suchraum eines zweiten PDCCH-Kandidaten miteinander assoziiert sind, wobei der erste PDCCH-Kandidat und der zweite PDCCH-Kandidat Kandidaten für einen DCI-Empfang sind; und
        die DCI zu übertragen; und

    einen Empfänger, der eingerichtet ist, einen PUSCH auf Frequenzdomänenressourcen eines Frequenzdomänenressourcenpools zu empfangen;
    wobei der Frequenzdomänenressourcenpool einer von einer Mehrzahl von Frequenzdomänenressourcenpools ist, wobei ein erster Frequenzdomänenressourcenpool der Mehrzahl von Frequenzdomänenressourcenpools mit einem CCE niedrigsten Indexes des ersten PDCCH-Kandidaten überlappt und ein zweiter Frequenzdomänenressourcenpool der Mehrzahl von Frequenzdomänenressourcenpools mit einem CCE niedrigsten Indexes des zweiten PDCCH-Kandidaten überlappt, und
    wobei der Frequenzdomänenressourcenpool aus der Mehrzahl von Frequenzdomänenressourcenpools basierend auf einem aus dem ersten PDCCH-Kandidaten und dem zweiten PDCCH-Kandidaten bestimmt wird.

8. Basisstation nach Anspruch 7, wobei der Frequenzdomänenressourcenpool ein Frequenzdomänenressourcenpool niedrigsten Indexes aus der Mehrzahl von Frequenzdomänenressourcenpools ist, der sich mit einem CCE niedrigsten Indexes überschneidet, das von dem einen aus dem ersten PDCCH-Kandidaten und dem zweiten PDCCH-Kandidaten belegt wird.

9. Basisstation nach Anspruch 7 oder 8, wobei ein Referenz-CORESET ein CORESET ist, das zwischen einem ersten CORESET und einem zweiten CORESET einen niedrigeren Indexwert aufweist, und der eine aus dem ersten PDCCH-Kandidaten und dem zweiten PDCCH-Kandidaten ein PDCCH-Kandidat ist, der dem Referenz-CORESET entspricht; der erste PDCCH-Kandidat und der zweite PDCCH-Kandidat jeweils einem ersten Suchraumsatz und einem zweiten Suchraumsatz entsprechen, und der erste Suchraumsatz und der zweite Suchraumsatz jeweils unterschiedliche Suchraumsatz-Indexwerte aufweisen; der erste Suchraumsatz und der zweite Suchraumsatz jeweils mit dem ersten CORESET und dem zweiten CORESET assoziiert sind; sowohl der erste Suchraumsatz als auch der zweite Suchraumsatz gemeinsame Suchraumsätze, CSS-Sätze, sind; die Signalisierung verwendet wird, um mindestens eine Verschachtelung von RBs anzugeben, und die von dem PUSCH belegten Frequenzdomänenressourcen eine Schnittmenge aus RBs, die in der mindestens einen Verschachtelung von RBs enthalten sind, und dem Frequenzdomänenressourcenpool sind; jeder der Mehrzahl von Frequenzdomänenressourcenpools ein Uplink-RB-Satz ist.

10. Verfahren, umfassend:

    Empfangen, von einer Basisstation, von Informationen, die angeben, dass ein erster Suchraum eines ersten PDCCH-Kandidaten und ein zweiter Suchraum eines zweiten PDCCH-Kandidaten miteinander assoziiert sind, wobei der erste PDCCH-Kandidat und der zweite PDCCH-Kandidat Kandidaten für DCI sind;
Empfangen der DCI von der Basisstation;
Übertragen eines PUSCH unter Verwendung von Frequenzdomänenressourcen eines Frequenzdomänenressourcenpools,
wobei der Frequenzdomänenressourcenpool einer von einer Mehrzahl von Frequenzdomänenressourcenpools ist, wobei ein erster Frequenzdomänenressourcenpool der Mehrzahl von Frequenzdomänenressourcenpools mit einem von dem ersten PDCCH-Kandidaten belegten CCE niedrigsten Indexes überlappt und ein zweiter Frequenzdomänenressourcenpool der Mehrzahl von Frequenzdomänenressourcenpools mit einem CCE niedrigsten Indexes des zweiten PDCCH-Kandidaten überlappt; und
Bestimmen des Frequenzdomänenressourcenpools aus der Mehrzahl von Frequenzdomänenressourcenpools basierend auf einem aus dem ersten PDCCH-Kandidaten und dem zweiten PDCCH-Kandidaten.

11. Verfahren nach Anspruch 10, wobei der Frequenzdomänenressourcenpool ein Frequenzdomänenressourcenpool niedrigsten Indexes aus der Mehrzahl von Frequenzdomänenressourcenpools ist, der sich mit einem CCE niedrigsten Indexes überschneidet, das von dem einen aus dem ersten PDCCH-Kandidaten und dem zweiten PDCCH-Kandidaten belegt wird.

12. Verfahren nach Anspruch 10 oder 11, wobei ein Referenz-CORESET ein CORESET ist, das zwischen einem ersten CORESET und einem zweiten CORESET einen niedrigeren Indexwert aufweist, und der eine aus dem ersten PDCCH-Kandidaten und dem zweiten PDCCH-Kandidaten ein PDCCH-Kandidat ist, der dem Referenz-CORESET entspricht.

13. Verfahren nach Anspruch 12, wobei der erste PDCCH-Kandidat und der zweite PDCCH-Kandidat jeweils einem ersten Suchraumsatz und einem zweiten Suchraumsatz entsprechen und der erste Suchraumsatz und der zweite Suchraumsatz jeweils unterschiedliche Suchraumsatz-Indexwerte aufweisen; der erste Suchraumsatz und der zweite Suchraumsatz jeweils mit dem ersten CORESET und dem zweiten CORESET assoziiert sind.

14. Verfahren nach Anspruch 13, wobei sowohl der erste Suchraumsatz als auch der zweite Suchraumsatz gemeinsame Suchraumsätze, CSS-Sätze, sind; die Informationen angeben, dass der erste PDCCH-Kandidat und der zweite PDCCH-Kandidat konfiguriert sind, miteinander assoziiert zu sein.

15. Verfahren nach einem der Ansprüche 10 bis 14, wobei die Signalisierung verwendet wird, um mindestens eine Verschachtelung von RBs anzugeben, und die Frequenzdomänenressourcen des PUSCH eine Schnittmenge aus RBs, die in der mindestens einen Verschachtelung von RBs enthalten sind, und dem Frequenzdomänenressourcenpool sind; jeder der mehreren Frequenzdomänenressourcenpools ein Uplink-RB-Satz ist.

**Revendications**

1. Équipement utilisateur, UE, comprenant :

un récepteur configuré pour :

recevoir, depuis une station de base, des informations indiquant qu'un premier espace de recherche d'un premier candidat canal de commande de liaison descendante physique, PDCCH, et un second espace de recherche d'un second candidat PDCCH sont associés l'un à l'autre, le premier candidat PDCCH et le second candidat PDCCH étant des candidats pour la réception d'informations de commande de liaison descendante, DCI ; et
recevoir, depuis la station de base, lesdites DCI ; et

un émetteur configuré pour transmettre un canal physique partagé de liaison montante, PUSCH, en utilisant des ressources du domaine fréquentiel d'un pool de ressources du domaine fréquentiel ;
dans lequel le pool de ressources du domaine fréquentiel est l'un d'une pluralité de pools de ressources du domaine fréquentiel, un premier pool de ressources du domaine fréquentiel de ladite pluralité de pools de ressources du domaine fréquentiel chevauche un élément de canal de commande, CCE, d'indice le plus faible du premier candidat PDCCH et un second pool de ressources du domaine fréquentiel de ladite pluralité de pools de ressources du domaine fréquentiel chevauche un CCE d'indice le plus faible du second candidat PDCCH, et
dans lequel l'UE est configuré pour déterminer le pool de ressources du domaine fréquentiel parmi la pluralité de pools de ressources du domaine fréquentiel sur la base de l'un du premier candidat PDCCH ou du second candidat PDCCH.

2.  UE selon la revendication 1, dans lequel le pool de ressources du domaine fréquentiel est le pool de ressources du domaine fréquentiel d'indice le plus faible parmi la pluralité de pools de ressources du domaine fréquentiel qui intersecte un CCE d'indice le plus faible occupé par ledit un du premier candidat PDCCH ou du second candidat PDCCH.

3.  UE selon la revendication 1 ou 2, dans lequel un ensemble de ressources de commande de référence, CORESET, est un CORESET qui présente une valeur d'indice inférieure entre un premier CORESET et un second CORESET, et ledit un du premier candidat PDCCH ou du second candidat PDCCH est un candidat PDCCH correspondant audit CORESET de référence.

4.  UE selon la revendication 3, dans lequel le premier candidat PDCCH et le second candidat PDCCH correspondent respectivement à un premier ensemble d'espaces de recherche et à un second ensemble d'espaces de recherche, le premier ensemble d'espaces de recherche et le second ensemble d'espaces de recherche présentant respectivement des valeurs d'indice d'ensemble d'espaces de recherche différentes ; le premier ensemble d'espaces de recherche et le second ensemble d'espaces de recherche étant respectivement associés au premier CORESET et au second CORESET.

5.  UE selon la revendication 4, dans lequel le premier ensemble d'espaces de recherche et le second ensemble d'espaces de recherche sont tous deux des ensembles d'espaces de recherche communs, CSS ; lesdites informations indiquent que le premier candidat PDCCH et le second candidat PDCCH sont configurés pour être associés l'un à l'autre.

6.  UE selon l'une quelconque des revendications 1 à 5, dans lequel la signalisation est utilisée pour indiquer au moins un entrelacement de blocs de ressources, RB, et les ressources du domaine fréquentiel du PUSCH sont une intersection de RB compris dans ledit au moins un entrelacement de RB et le pool de ressources du domaine fréquentiel ; chacun des multiples pools de ressources du domaine fréquentiel est un ensemble de RB de liaison montante.

7.  Station de base, comprenant :

    un émetteur configuré pour :

       transmettre des informations indiquant qu'un premier espace de recherche d'un premier candidat PDCCH et un second espace de recherche d'un second candidat PDCCH sont associés l'un à l'autre, le premier candidat PDCCH et le second candidat PDCCH étant des candidats pour la réception de DCI ; et transmettre lesdites DCI ; et

    un récepteur configuré pour recevoir un PUSCH sur des ressources du domaine fréquentiel d'un pool de ressources du domaine fréquentiel ;
    dans laquelle le pool de ressources du domaine fréquentiel est l'un d'une pluralité de pools de ressources du domaine fréquentiel, un premier pool de ressources du domaine fréquentiel de ladite pluralité de pools de ressources du domaine fréquentiel chevauche un CCE d'indice le plus faible du premier candidat PDCCH et un second pool de ressources du domaine fréquentiel de ladite pluralité de pools de ressources du domaine fréquentiel chevauche un CCE d'indice le plus faible du second candidat PDCCH, et
    dans laquelle le pool de ressources du domaine fréquentiel est déterminé parmi la pluralité de pools de ressources du domaine fréquentiel sur la base de l'un du premier candidat PDCCH ou du second candidat PDCCH.

8.  Station de base selon la revendication 7, dans laquelle le pool de ressources du domaine fréquentiel est le pool de ressources du domaine fréquentiel d'indice le plus faible parmi la pluralité de pools de ressources du domaine fréquentiel qui intersecte un CCE d'indice le plus faible occupé par ledit un du premier candidat PDCCH ou du second candidat PDCCH.

9.  Station de base selon la revendication 7 ou 8, dans laquelle un CORESET de référence est un CORESET qui présente une valeur d'indice inférieure entre un premier CORESET et un second CORESET, et ledit un du premier candidat PDCCH ou du second candidat PDCCH est un candidat PDCCH correspondant audit CORESET de référence ; le premier candidat PDCCH et le second candidat PDCCH correspondent respectivement à un premier ensemble d'espaces de recherche et à un second ensemble d'espaces de recherche, ledit premier ensemble d'espaces de recherche et ledit second ensemble d'espaces de recherche ensemble présentant respectivement des valeurs d'indice d'ensemble d'espaces de recherche différentes ; le premier ensemble d'espaces de recherche et le second ensemble d'espaces de recherche sont respectivement associés au premier CORESET et au second CORESET ; le premier ensemble d'espaces de recherche et le second ensemble d'espaces de recherche sont tous deux des ensembles d'espaces de recherche communs, ensembles CSS ; la signalisation est utilisée pour indiquer au moins un entrelacement de RB, et les ressources du domaine fréquentiel occupées par le PUSCH étant une intersection de RB compris dans ledit au moins un entrelacement de RB et le pool de ressources du domaine fréquentiel ; chacun de la pluralité de pools de ressources du domaine fréquentiel est un ensemble de RB de liaison montante.

10. Procédé comprenant :

la réception, depuis une station de base, d'informations indiquant qu'un premier espace de recherche d'un premier candidat PDCCH et un second espace de recherche d'un second candidat PDCCH sont associés l'un à l'autre, le premier candidat PDCCH et le second candidat PDCCH étant des candidats pour des DCI ;
la réception, depuis la station de base, desdites DCI ;
la transmission un PUSCH en utilisant des ressources du domaine fréquentiel d'un pool de ressources du domaine fréquentiel,
dans lequel le pool de ressources du domaine fréquentiel est l'un d'une pluralité de pools de ressources du domaine fréquentiel, un premier pool de ressources du domaine fréquentiel de ladite pluralité de pools de ressources du domaine fréquentiel chevauche un CCE d'indice le plus faible occupé par le premier candidat PDCCH et un second pool de ressources du domaine fréquentiel de ladite pluralité de pools de ressources du domaine fréquentiel chevauche un CCE d'indice le plus faible du second candidat PDCCH ; et
la détermination du pool de ressources du domaine fréquentiel parmi la pluralité de pools de ressources du domaine fréquentiel sur la base de l'un du premier candidat PDCCH ou du second candidat PDCCH.

11. Procédé selon la revendication 10, dans lequel le pool de ressources du domaine fréquentiel est le pool de ressources du domaine fréquentiel d'indice le plus faible parmi la pluralité de pools de ressources du domaine fréquentiel qui intersecte un CCE d'indice le plus faible occupé par ledit un du premier candidat PDCCH ou du second candidat PDCCH.

12. Procédé selon la revendication 10 ou 11, dans lequel un CORESET de référence est un CORESET qui présente une valeur d'indice inférieure entre un premier CORESET et un second CORESET, et ledit un du premier candidat PDCCH ou du second candidat PDCCH est un candidat PDCCH correspondant audit CORESET de référence.

13. Procédé selon la revendication 12, dans lequel le premier candidat PDCCH et le second candidat PDCCH correspondent respectivement à un premier ensemble d'espaces de recherche et à un second ensemble d'espaces de recherche, ledit premier ensemble d'espaces de recherche et ledit second ensemble d'espaces de recherche présentant respectivement des valeurs d'indice d'ensemble d'espaces de recherche différentes ; le premier ensemble d'espaces de recherche et le second ensemble d'espaces de recherche sont respectivement associés au premier CORESET et au second CORESET.

14. Procédé selon la revendication 13, dans lequel le premier ensemble d'espaces de recherche et le second ensemble d'espaces de recherche sont tous deux des ensembles d'espaces de recherche communs, ensembles CSS ; les informations indiquent que le premier candidat PDCCH et le second candidat PDCCH sont configurés pour être associés l'un à l'autre.

15. Procédé selon l'une quelconque des revendications 10 à 14, dans lequel la signalisation est utilisée pour indiquer au moins un entrelacement de RB, et les ressources du domaine fréquentiel du PUSCH sont une intersection de RB compris dans ledit au moins un entrelacement de RB et le pool de ressources du domaine fréquentiel ; chacun des multiples pools de ressources du domaine fréquentiel est un ensemble de RB de liaison montante.

**100**

First node

↓

101

Receiving first information

↓

102

Receiving first signaling

↓

103

Transmitting first PUSCH

FIG. 1

EPS 200

NR-RAN
202

220
HSS

211
MME/AMF/
UPF

214
Other
MMEs/AMFs/UPFs

201
UE

203
NR Node B

212
S-GW

213
P-GW

230
Internet
Service

204
Other NR
Nodes B

5G-CN/EPC
210

FIG.2

## Control Plane
### 300

| L3 | RRC | ⟋ 306 |
|---|---|---|
| L2 | PDCP | ⟋ 304 |
| | RLC | ⟋ 303 |
| | MAC | ⟋ 302 |
| L1 | PHY | ⟋ 301 |

305

## User Plane
### 350

| L2 | SDAP | ⟋ 356 |
|---|---|---|
| | PDCP | ⟋ 354 |
| | RLC | ⟋ 353 |
| | MAC | ⟋ 352 |
| L1 | PHY | ⟋ 351 |

355

FIG. 3

410

416 — Transmitting processor

471 — Multi-antenna transmitting processor

418 — Transmitter / Receiver  420

452  Transmitter / Receiver  454

457 — Multi-antenna transmitting processor

468 — Transmitting processor

450

475 — Controller /processor

476 — Memory

459 — Controller /processor

460 — Memory

467 — Data source

470 — Receiving processor

472 — Multi-antenna receiving processor

418 — Transmitter / Receiver  420

452  Transmitter / Receiver  454

458 — Multi-antenna receiving processor

456 — Receiving processor

FIG. 4

```
┌─────────────────────────┐                          ┌─────────────────────────┐
│     U2.Second node      │                          │      U1.First node      │
└─────────────────────────┘                          └─────────────────────────┘
             │                                                     │
┌─────────────────────────┐                                       │
│  S521.transmitting first│                                       │
│      information        │                                       │
└─────────────────────────┘                                       │
             │                                                     │
             ├──────────────first information──────────────────▶  │
             │                                   ┌─────────────────────────┐
             │                                   │   S511.receiving first  │
             │                                   │       information       │
             │                                   └─────────────────────────┘
             │                                                     │
┌─────────────────────────┐                                       │
│  S522.transmitting first│                                       │
│        signaling        │                                       │
└─────────────────────────┘                                       │
             │                                                     │
             ├───────────────first signaling───────────────────▶  │
             │                                   ┌─────────────────────────┐
             │                                   │   S512.receiving first  │
             │                                   │        signaling        │
             │                                   └─────────────────────────┘
             │                                   ┌─────────────────────────┐
             │                                   │  S513.transmitting first│
             │                                   │          PUSCH          │
             │                                   └─────────────────────────┘
             │                                                     │
             ◀──────────────first PUSCH────────────────────────── │
┌─────────────────────────┐                                       │
│ S523.receiving first PUSCH│                                     │
└─────────────────────────┘                                       │
             │                                                     │
          ( End )                                              ( End )
```

FIG. 5

```
┌──────────────────┐  corresponding  ┌──────────────────────┐
│   First PDCCH    │       to        │                      │
│   candidate      ├─────────────────┤ First search space set│
└──────────────────┘                 └──────────────────────┘
                                                │
                                       respectively having
                                       different search space
                                       set index values
                                                │
┌──────────────────┐  corresponding  ┌──────────────────────┐
│  Second PDCCH    │       to        │ Second search space  │
│   candidate      ├─────────────────┤        set           │
└──────────────────┘                 └──────────────────────┘
```

FIG. 6

```
┌─────────────────┐      being       ┌─────────────────┐
│                 │   associated     │                 │
│ First search    │     with         │ First control   │
│ space set       ├──────────────────┤ resource set    │
│                 │                  │                 │
└─────────────────┘                  └─────────────────┘

┌─────────────────┐      being       ┌─────────────────┐
│                 │   associated     │                 │
│ Second search   │     with         │ Second control  │
│ space set       ├──────────────────┤ resource set    │
│                 │                  │                 │
└─────────────────┘                  └─────────────────┘
```

FIG. 7

```
┌──────────────────────┐
│ Time-domain relation │
│ between first PDCCH   │
│ candidate and second  │
│ PDCCH candidate       │
├──────────────────────┤
│ Frequency-domain      │
│ relation between      │
│ first PDCCH candidate │      at least one of      ┌───────────────────────┐
│ and second PDCCH      │      four being used      │ Whether reference PDCCH│
│ candidate             │      to determine         │ candidate is the first │
├──────────────────────┤ ─────────────────────────▶ │ PDCCH candidate or the │
│ Relation between      │                           │ second PDCCH candidate │
│ first search space    │                           └───────────────────────┘
│ set and second        │
│ search space set      │
├──────────────────────┤
│ Relation between      │
│ first control         │
│ resource set and      │
│ second control        │
│ resource set          │
└──────────────────────┘
```

FIG. 8

```
┌─────────────────┐   being used to   ┌─────────────────┐
│                 │    indicate       │ At least one    │
│ First signaling ├──────────────────▶│ interlace of    │
│                 │                   │ resource blocks │
└─────────────────┘                   └─────────────────┘

┌─────────────────┐              ┌──────────────────────────────┐
│ Frequency-domain│              │ Intersection of resource     │
│ resources       │  comprising  │ blocks comprised in the at   │
│ occupied        ├─────────────▶│ least one interlace of       │
│ by first PUSCH  │              │ resource blocks and target   │
│                 │              │ frequency-domain resource pool│
└─────────────────┘              └──────────────────────────────┘
```

FIG. 9

| First signaling | being → | DCI format 0_0 with CRC scrambled by an RNTI other than TC_RNTI |
|---|---|---|

FIG.10

**First node**

~ 1100

First receiver 1101

↕

First transmitter 1102

FIG. 11

**Second node**

~ 1200

Second transmitter 1201

↕

Second receiver 1202

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021243767 A1

- CN 112868201 A